(19) Europäisches Patentamt / European Patent Office / Office européen des brevets

(11) **EP 3 547 683 B1**

(12) **EUROPEAN PATENT SPECIFICATION**

(45) Date of publication and mention
of the grant of the patent:
**22.10.2025 Bulletin 2025/43**

(21) Application number: **16925804.3**

(22) Date of filing: **28.12.2016**

(51) International Patent Classification (IPC):
*H04N 19/11* (2014.01)    *H04N 19/154* (2014.01)
*H04N 19/176* (2014.01)    *H04N 19/192* (2014.01)
*H04N 19/186* (2014.01)

(52) Cooperative Patent Classification (CPC):
**H04N 19/176; H04N 19/11; H04N 19/154;
H04N 19/186; H04N 19/192**

(86) International application number:
**PCT/CN2016/112628**

(87) International publication number:
**WO 2018/119740 (05.07.2018 Gazette 2018/27)**

(54) **CHROMINANCE PREDICTION METHOD AND DEVICE**

CHROMINANZVORHERSAGEVERFAHREN UND -VORRICHTUNG

PROCÉDÉ ET DISPOSITIF DE PRÉDICTION DE CHROMINANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.10.2019 Bulletin 2019/40**

(73) Proprietor: **Huawei Technologies Co., Ltd.
Longgang District
Shenzhen, Guangdong 518129 (CN)**

(72) Inventors:
• **HAN, Yu
Shenzhen
Guangdong 518129 (CN)**
• **AN, Jicheng
Shenzhen
Guangdong 518129 (CN)**
• **ZHENG, Jianhua
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
CN-A- 103 314 588      CN-A- 103 636 203
CN-A- 103 650 512      CN-A- 106 162 175
US-A1- 2016 198 190

• Y-J CHIU ET AL: "Cross-channel techniques to improve intra chroma prediction", 6. JCT-VC MEETING; 97. MPEG MEETING; 14-7-2011 - 22-7-2011; TORINO; (JOINT COLLABORATIVE TEAM ON VIDEO CODING OF ISO/IEC JTC1/ SC29/WG11 AND ITU-T SG.16 ), no. JCTVC-F502, 2 July 2011 (2011-07-02), XP030009525
• YEO C ET AL: "Chroma intra prediction using reconstructed luma", 3. JCT-VC MEETING; 94. MPEG MEETING; 7-10-2010 - 15-10-2010;GUANGZHOU; (JOINT COLLABORATIVE TEAM ON VIDEO CODING OF ISO/IECJTC1/SC29/WG11 AND ITU-T SG.16 ), no. JCTVC-C040, 1 October 2010 (2010-10-01), XP030007747
• XIU X ET AL: "Decoder-side intra mode derivation", 3. JVET MEETING; 26-5-2016 - 1-6-2016; GENEVA; (THE JOINT VIDEO EXPLORATION TEAM OF ISO/IEC JTC1/SC29/ WG11 AND ITU-T SG.16 ), no. JVET-C0061-v3, 26 May 2016 (2016-05-26), XP030150162

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(Cont. next page)

- **LIANG FEI ET AL: "A light-weight HEVC encoder for image coding", 2013 VISUAL COMMUNICATIONS AND IMAGE PROCESSING (VCIP), IEEE, 17 November 2013 (2013-11-17), pages 1 - 5, XP032543699, DOI: 10.1109/ VCIP.2013.6706448**

## Description

### TECHNICAL FIELD

The present invention relates to the video compression and coding/decoding field, and in particular, to a chrominance prediction method and apparatus.

### BACKGROUND

A digital video capability can be incorporated into various apparatuses, including a digital television set, a digital live broadcasting system, a radio broadcasting system, a personal digital assistant (PDA), a laptop or desktop computer, a tablet computer, an ebook reader, a digital camera, a digital recording apparatus, a digital media player, a video game apparatus, a video game console, a cellular or satellite radio telephone, a video conferencing apparatus, a video stream apparatus, and the like. A digital video apparatus implements video compression technologies, such as video compression technologies described in standards defined in MPEG-2, MPEG-4, ITU-TH.263, Advanced Video Coding (AVC) in ITU-TH.264/MPEG-4 Part 10, and the High Efficiency Video Coding (HEVC) standard in ITU-TH.265, and extensions of the standards, to transmit and receive digital video information more efficiently. The video apparatus may transmit, receive, encode, decode, and/or store the digital video information more efficiently by implementing these video coding/decoding technologies.

In a television system, luminance-chrominance-chrominance (YUV) color encoding is mostly used for video compression and coding, and is a standard widely used in European television systems. A YUV color space includes one luminance signal Y and two color difference signals U and V, and the three components are independent of each other. A representation manner in which YUV color modes are separated from each other is more flexible, occupies less bandwidth for transmission, and has advantages over a conventional red-green-blue (RGB) color model. For example, a YUV 4:2:0 form indicates that each of two chrominance components U and V is only half of a luminance component Y both in a horizontal direction and in a vertical direction. To be specific, there are four luminance components Y but only one chrominance component U and one chrominance component V in four sampled pixels. When indication is performed in this way, a data volume is further reduced. Video is compressed in this chrominance sampling manner by using characteristics of physiological vision of human eyes.

Predictive coding is a commonly used technical means in a video compression technology, to be specific, data information of a previously encoded frame is used to predict a frame that is currently to be encoded. A predicted value is obtained through prediction. The predicted value is not completely equal to an actual value, and there is a residual value between the predicted value and the actual value. If prediction is more proper, the predicted value is closer to the actual value, and the residual value is smaller. In this way, a data volume can be greatly reduced by encoding the residual value. An initial image is restored and reconstructed by adding the predicted value and the residual value when decoding is performed on a decoder side. This is a basic idea and method for predictive coding. In mainstream coding standards, predictive coding is classified into two basic types: intra-frame prediction and inter-frame prediction. In intra-frame prediction, luminance prediction and chrominance prediction need to be performed on a luminance component and a chrominance component of a video sequence.

The input document to Joint Collaborative Team on Video Coding (JCT-VC) of ITU-T SG16 WP3 and ISO/IEC JTC1/SC29/WG11 with document number JCTVC-F502 was published on 02-07-2011 under the title "Cross-channel techniques to improve intra chroma prediction" by Yi-Jen Chiu et al. The document reports two techniques to improve intra chroma prediction: a 2-dimensional 3x2 filter for LM intra chroma prediction mode, and a new intra chroma prediction mode based on the technique of local adaptive prediction selection (LAPS) process to produce the intra chroma prediction sample from the comparison of the reconstructed luma sample of target location to the local reconstructed luma samples in the neighborhood.

The document XIU X ET AL: "Decoder-side intra mode derivation" was published on 26 May 2016 at the 3. MEETING of THE JOINT VIDEO EXPLORATION TEAM OF ISO/IEC JTC1/SC29/WG11 AND ITU-T SG. 16 with document number JVET-C0061-v3. To reduce the overhead of intra mode signaling, this document presents a decoder-side intra mode derivation (DIMD) approach. In the proposed approach, instead of signaling intra mode explicitly, the information is derived at both encoder and decoder from the neighboring reconstructed samples of current block.

### SUMMARY

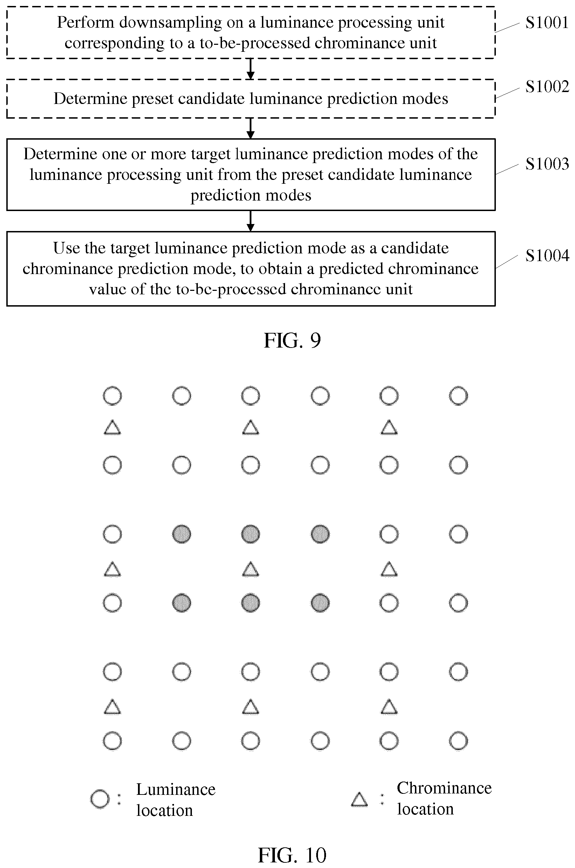

Embodiments of the present invention provide a chrominance prediction method and apparatus in accordance with the appended independent claims 1 and 13, respectively. Enabling disclosure of the protected invention is provided with the embodiments described in conjunction with figure 9. Other aspects, examples or embodiments are provided for illustrative purposes only and do not define the protected invention.

Based on a reconstructed luminance unit, an improved candidate chrominance prediction mode set is constructed, and a chrominance prediction mode is selected by performing encoding by using an appropriate mode, thereby improving encoding efficiency.

A first aspect of the embodiments of the present invention provides a chrominance prediction method, where a to-be-processed chrominance unit corresponds to one luminance processing unit, the luminance processing unit and the to-be-processed chrominance unit are respectively processing units of a luminance component and a chrominance component of a same image area, the luminance processing unit corresponds to one or more reconstructed luminance units, and the method includes: determining one or more target luminance prediction modes of the luminance processing unit from preset candidate luminance prediction modes, where a difference between a predicted luminance value, of the luminance processing unit, corresponding to any target luminance prediction mode and a reconstructed luminance value of the luminance processing unit is less than or equal to a difference between a predicted luminance value, of the luminance processing unit, corresponding to each candidate luminance prediction mode that is not determined as the target luminance prediction mode and the reconstructed luminance value of the luminance processing unit; and obtaining a predicted chrominance value of the to-be-processed chrominance unit, where a candidate chrominance prediction mode set of the to-be-processed chrominance unit includes the target luminance prediction mode.

A beneficial effect of this embodiment of the present invention is as follows: Based on a reconstructed luminance unit, an improved candidate chrominance prediction mode set is constructed, and a chrominance prediction mode is selected by performing encoding by using an appropriate mode, thereby improving encoding efficiency.

According to the method in the first aspect, in a first feasible implementation of the first aspect, the determining one or more target luminance prediction modes of the luminance processing unit from preset candidate luminance prediction modes includes: determining a candidate luminance prediction mode subset from the preset candidate luminance prediction modes; selecting an initial prediction mode from the candidate luminance prediction mode subset; and when the initial prediction mode does not meet a preset condition, updating the preset candidate luminance prediction modes based on the initial prediction mode, redetermining the candidate luminance prediction mode subset from the updated preset candidate luminance prediction modes, and reselecting the initial prediction mode from the redetermined candidate luminance prediction mode subset, until the reselected initial prediction mode meets the preset condition; or when the initial prediction mode meets a preset condition, using the initial prediction mode as the target luminance prediction mode.

A beneficial effect of this embodiment of the present invention is as follows: Through iterative searches, an operation amount required for finding an optimal prediction mode is reduced, processing efficiency is improved, and a processing time is reduced.

According to the method in the first feasible implementation of the first aspect, in a second feasible implementation of the first aspect, the preset candidate luminance prediction modes include at least one of a prediction mode included in directional prediction modes and a prediction mode included in non-directional prediction modes, the directional prediction modes include a prediction mode that is at an angle of N degrees with a horizontal direction of a two-dimensional plane, N is a non-negative number less than 360, the non-directional prediction modes include a direct current (DC) prediction mode and a planar prediction mode, and the determining a candidate luminance prediction mode subset from the preset candidate luminance prediction modes includes: determining that the candidate luminance prediction mode subset is the same as the preset candidate luminance prediction modes; or determining that the candidate luminance prediction mode subset includes prediction modes selected from the directional prediction modes at a preset angle interval; or determining that the candidate luminance prediction mode subset includes prediction modes selected from the directional prediction modes at a preset angle interval and the non-directional prediction mode.

According to the method in the first or the second feasible implementation of the first aspect, in a third feasible implementation of the first aspect, the selecting an initial prediction mode from the candidate luminance prediction mode subset includes: when the candidate luminance prediction mode subset includes only one candidate luminance prediction mode, determining that the candidate luminance prediction mode is the initial prediction mode; or when the candidate luminance prediction mode subset includes at least two candidate luminance prediction modes, calculating a difference between the reconstructed luminance value and each of candidate predicted luminance values corresponding to the candidate luminance prediction modes in the candidate luminance prediction mode subset, and determining the initial prediction mode based on the difference, where a difference between a predicted luminance value, of the luminance processing unit, corresponding to any initial prediction mode and the reconstructed luminance value of the luminance processing unit is less than or equal to a difference between a predicted luminance value, of the luminance processing unit, corresponding to each candidate luminance prediction mode that is in the candidate luminance prediction mode subset and that is not determined as the initial prediction mode and the reconstructed luminance value of the luminance processing unit.

According to the method in the third feasible implementation of the first aspect, in a fourth feasible implementation of the first aspect, the candidate predicted luminance value is a candidate predicted luminance value matrix, the reconstructed luminance value is a reconstructed luminance value matrix, and the calculating a difference between the reconstructed luminance value and each of candidate predicted luminance values corresponding to the candidate luminance prediction modes in the candidate luminance prediction mode subset includes: separately calculating a difference between an element at a corresponding location in the candidate predicted luminance value matrix and an element at a corresponding location in the reconstructed luminance value matrix, to obtain a difference matrix; and determining the difference based on the difference matrix.

According to the method in the fourth feasible implementation of the first aspect, in a fifth feasible implementation of the first aspect, the determining the difference based on the difference matrix includes: accumulating absolute values of all elements in the difference matrix as the difference; or transforming the difference matrix to obtain a transformed difference matrix, and accumulating absolute values of all elements in the transformed difference matrix as the difference; or sequentially transforming, quantizing, dequantizing, and inversely transforming the difference matrix to obtain a reconstructed difference matrix, and accumulating absolute values of all elements in the reconstructed difference matrix as the difference.

A beneficial effect of this embodiment of the present invention is that different calculation manners may be selected based on different complexity and performance requirements, and the different calculation manners are suitable for different application scenarios.

According to the method in the fifth feasible implementation of the first aspect, in a sixth feasible implementation of the first aspect, the transform includes Hadamard transform, Haar transform, discrete cosine transform (DCT), or discrete sine transform (DST); and correspondingly, the inverse transform includes inverse Hadamard transform corresponding to the Hadamard transform, inverse Haar transform corresponding to the Haar transform, inverse discrete cosine transform corresponding to the discrete cosine transform, or inverse discrete sine transform corresponding to the discrete sine transform.

A beneficial effect of this embodiment of the present invention is that different transform manners may be selected based on different complexity and performance requirements, and the different transform manners are suitable for different application scenarios.

According to the method in any one of the first to the sixth feasible implementations of the first aspect, in a seventh feasible implementation of the first aspect, the redetermining the candidate luminance prediction mode subset from the updated preset candidate luminance prediction modes includes: determining that the redetermined candidate luminance prediction mode subset includes the initial prediction mode and prediction modes that have a preset angle difference from the initial prediction mode.

According to the method in the seventh feasible implementation of the first aspect, in an eighth feasible implementation of the first aspect, the prediction modes that have the preset angle difference from the initial prediction mode include: M prediction modes that are adjacent to the initial prediction mode, where M is a positive number.

According to the method in any one of the first to the eighth feasible implementations of the first aspect, in a ninth feasible implementation of the first aspect, the preset condition includes: the initial prediction mode is the non-directional prediction mode; or each prediction mode that has the preset angle difference from the initial prediction mode exists in the candidate luminance prediction mode subset that is determined from the preset candidate luminance prediction modes or that is redetermined from the updated preset candidate luminance prediction modes; or a quantity of reselection times of the initial prediction mode reaches a preset quantity of times; or a difference corresponding to the initial prediction mode is less than a preset threshold.

A beneficial effect of this embodiment of the present invention is that different iteration termination conditions may be selected based on different complexity and performance requirements, and the different iteration termination conditions are suitable for different application scenarios.

According to the method in any one of the first aspect, or the first to the ninth feasible implementations of the first aspect, in a tenth feasible implementation of the first aspect, the obtaining a predicted chrominance value of the to-be-processed chrominance unit includes: determining a candidate chrominance prediction mode set of the to-be-processed chrominance unit based on the target luminance prediction mode; selecting a chrominance prediction mode of the to-be-processed chrominance unit from the candidate chrominance prediction mode set; and determining the predicted chrominance value of the to-be-processed chrominance unit based on the chrominance prediction mode.

According to the method in the tenth feasible implementation of the first aspect, in an eleventh feasible implementation of the first aspect, the determining a candidate chrominance prediction mode set of the to-be-processed chrominance unit based on the target luminance prediction mode includes: determining that the candidate chrominance prediction mode set includes only the target luminance prediction mode.

A beneficial effect of this embodiment of the present invention is that the candidate chrominance prediction mode includes only the target luminance prediction mode, thereby reducing a code rate of an encoding mode.

According to the method in the tenth feasible implementation of the first aspect, in a twelfth feasible implementation of the first aspect, the determining a candidate chrominance prediction mode set of the to-be-processed chrominance unit based on the target luminance prediction mode includes: determining that the candidate chrominance prediction mode set includes the target luminance prediction mode and one or more preset candidate chrominance prediction modes.

A beneficial effect of this embodiment of the present invention is that another preset prediction mode is added to the candidate chrominance prediction modes, thereby avoiding impact exerted on encoding performance when the target luminance prediction mode is misjudged.

According to the method in the twelfth feasible implementation of the first aspect, in a thirteenth feasible implementation of the first aspect, the preset candidate chrominance prediction modes include at least one of a horizontal prediction mode, a vertical prediction mode, the direct current prediction mode, the planar prediction mode, and a direct prediction mode (DM).

According to the method in the twelfth or the thirteenth feasible implementation of the first aspect, in a fourteenth feasible implementation of the first aspect, the preset candidate chrominance prediction modes further include the directional prediction mode in a non-horizontal or non-vertical direction, or a linear prediction mode (LM).

According to the method in any one of the tenth to the fourteenth feasible implementations of the first aspect, in a fifteenth feasible implementation of the first aspect, after the determining a candidate chrominance prediction mode set of the to-be-processed chrominance unit, the method further includes: determining a codeword of a candidate chrominance prediction mode in the candidate chrominance prediction mode set.

A beneficial effect of this embodiment of the present invention is that the codeword of the candidate chrominance prediction mode is adjusted based on a probability that each candidate chrominance prediction mode in the candidate chrominance prediction mode set is selected, so that encoding performance can be further improved.

According to the method in the fifteenth feasible implementation of the first aspect, in a sixteenth feasible implementation of the first aspect, the determining a codeword of a candidate chrominance prediction mode in the candidate chrominance prediction mode set includes: determining the codeword of the candidate chrominance prediction mode in the candidate chrominance prediction mode set by using a variable-length code.

According to the method in the sixteenth feasible implementation of the first aspect, in a seventeenth feasible implementation of the first aspect, a prediction mode corresponding to a candidate predicted luminance value that is of the luminance processing unit and that has a smallest difference from the reconstructed luminance value of the luminance processing unit is used as a first target luminance prediction mode, and the determining the codeword of the candidate chrominance prediction mode in the candidate chrominance prediction mode set by using a variable-length code includes: when the candidate chrominance prediction mode set includes the first target luminance prediction mode, the linear prediction mode, and the direct prediction mode, assigning a smallest codeword to the linear prediction mode, assigning, to the first target luminance prediction mode, a smallest codeword other than the codeword used to represent the linear prediction mode, and assigning, to the direct prediction mode, a smallest codeword other than the codewords used to represent the linear prediction mode and the first target luminance prediction mode; or when the candidate chrominance prediction mode set includes the first target luminance prediction mode, the linear prediction mode, and the direct prediction mode, assigning a smallest codeword to the first target luminance prediction mode, assigning, to the linear prediction mode, a smallest codeword other than the codeword used to represent the first target luminance prediction mode, and assigning, to the direct prediction mode, a smallest codeword other than the codewords used to represent the linear prediction mode and the first target luminance prediction mode; or when the candidate chrominance prediction mode set includes the first target luminance prediction mode and the direct prediction mode, assigning a smallest codeword to the first target luminance prediction mode, and assigning, to the direct prediction mode, a smallest codeword other than the codeword used to represent the first target luminance prediction mode.

A beneficial effect of this embodiment of the present invention is that a relatively short codeword is assigned to a candidate chrominance prediction mode with a high probability of being selected from candidate chrominance prediction mode set is selected, so that encoding performance can be further improved.

According to the method in the sixteenth or the seventeenth feasible implementation of the first aspect, in an eighteenth feasible implementation of the first aspect, the determining the codeword of the candidate chrominance prediction mode in the candidate chrominance prediction mode set by using a variable-length code further includes: determining a length of the variable-length code based on a quantity of the candidate chrominance prediction modes; and when the quantity of the candidate chrominance prediction modes changes, increasing or decreasing the length of the variable-length code by one or more bits.

According to the method in any one of the first aspect, or the first to the eighteenth feasible implementations of the first aspect, in a nineteenth feasible implementation of the first aspect, before the determining one or more target luminance prediction modes of the luminance processing unit from preset candidate luminance prediction modes, the method further includes: determining that the preset candidate luminance prediction modes include a candidate luminance prediction mode set, where the candidate luminance prediction mode set includes the directional prediction mode and the non-directional prediction mode; or determining that the preset candidate luminance prediction modes include luminance prediction modes of the one or more reconstructed luminance units corresponding to the luminance processing unit; or determining that the preset candidate luminance prediction modes include chrominance prediction modes of reconstructed chrominance units in a neighborhood of the to-be-processed chrominance unit.

A beneficial effect of this embodiment of the present invention is that prediction modes with relatively strong correlation are selected as the candidate luminance prediction modes to participate in searches, thereby improving search efficiency and increasing a search speed.

According to the method in the nineteenth feasible implementation of the first aspect, in a twentieth feasible implementation of the first aspect, the determining that the preset candidate luminance prediction modes include luminance prediction modes of the one or more reconstructed luminance units corresponding to the luminance processing unit further includes: determining that the preset candidate luminance prediction modes include luminance prediction modes that are correlated to the luminance prediction modes of the one or more reconstructed luminance units.

According to the method in the twentieth feasible implementation of the first aspect, in a twenty-first feasible implementation of the first aspect, for the luminance prediction modes that are correlated to the luminance prediction modes of the one or more reconstructed luminance units: when the luminance prediction mode is the directional prediction mode, the correlated luminance prediction modes include P prediction modes adjacent to the luminance prediction modes of the one or more reconstructed luminance units, where P is a positive number; or when the luminance prediction mode is the directional prediction mode, the correlated luminance prediction modes include Q prediction modes adjacent to the luminance prediction modes of the one or more reconstructed luminance units and include the non-directional prediction mode, where Q is a positive number; or when the luminance prediction mode is the non-directional prediction mode, the correlated luminance prediction modes include the preset directional prediction mode.

According to the method in any one of the nineteenth to the twenty-first feasible implementations of the first aspect, in a twenty-second feasible implementation of the first aspect, the chrominance prediction modes of the reconstructed chrominance units in the neighborhood of the to-be-processed chrominance unit include: chrominance prediction modes of reconstructed chrominance units that are adjacent to the top, the left, the upper left, the upper right, and the lower left of the to-be-processed chrominance unit.

According to the method in any one of the first aspect, or the first to the twenty-second feasible implementations of the first aspect, in a twenty-third feasible implementation of the first aspect, before the determining one or more target luminance prediction modes of the luminance processing unit from preset candidate luminance prediction modes, the method further includes: performing downsampling on the luminance processing unit; and correspondingly, the determining one or more target luminance prediction modes of the luminance processing unit from preset candidate luminance prediction modes includes: determining one or more target luminance prediction modes of the downsampled luminance processing unit from the preset candidate luminance prediction modes.

A beneficial effect of this embodiment of the present invention is that because downsampling is performed on the luminance processing unit, operation complexity is reduced, and the downsampled luminance processing unit can more closely reflect a prediction direction of a chrominance unit.

According to the method in the twenty-third feasible implementation of the first aspect, in a twenty-fourth feasible implementation of the first aspect, the performing downsampling on the luminance processing unit includes: performing downsampling on the luminance processing unit by using a filter whose filtering coefficient is $\begin{bmatrix} \frac{1}{8} & \frac{1}{4} & \frac{1}{8} \\ \frac{1}{8} & \frac{1}{4} & \frac{1}{8} \end{bmatrix}$ ; or performing

downsampling on the luminance processing unit by using a filter whose filtering coefficient is $\begin{bmatrix} 1 & 0 \\ 0 & 0 \end{bmatrix}$ ; or performing

downsampling on the luminance processing unit by using a filter whose filtering coefficient is $\begin{bmatrix} \frac{1}{2} & 0 \\ \frac{1}{2} & 0 \end{bmatrix}$ ; or performing

downsampling on the luminance processing unit by using a filter whose filtering coefficient is $\begin{bmatrix} \frac{1}{4} & \frac{1}{4} \\ \frac{1}{4} & \frac{1}{4} \end{bmatrix}$ .

A beneficial effect of this embodiment of the present invention is that different filters may be selected based on different complexity and performance requirements, and the different filters are suitable for different application scenarios.

According to the method in any one of the tenth to the twenty-fourth feasible implementations of the first aspect, in a twenty-fifth feasible implementation of the first aspect, the method is used to encode the to-be-processed chrominance unit, and the selecting a chrominance prediction mode of the to-be-processed chrominance unit from the candidate chrominance prediction mode set includes: traversing candidate chrominance prediction modes in the candidate chrominance prediction mode set to obtain corresponding candidate predicted chrominance values; calculating encoding costs of each candidate chrominance prediction mode based on an original value of the to-be-processed chrominance unit and the candidate predicted chrominance values obtained through the traversing; determining a candidate chrominance prediction mode with smallest encoding costs as the chrominance prediction mode of the to-be-processed chrominance unit; and encoding an index of the chrominance prediction mode in the candidate chrominance prediction mode set.

According to the method in the twenty-fifth feasible implementation of the first aspect, in a twenty-sixth feasible implementation of the first aspect, the encoding an index of the chrominance prediction mode in the candidate chrominance prediction mode set includes: encoding the index based on the determined codeword of the candidate chrominance prediction mode in the candidate chrominance prediction mode set.

According to the method in any one of the tenth to the twenty-fourth feasible implementations of the first aspect, in a twenty-seventh feasible implementation of the first aspect, the method is used to decode the to-be-processed chrominance unit, and the selecting a chrominance prediction mode of the to-be-processed chrominance unit from the candidate chrominance prediction mode set includes: decoding an index of the chrominance prediction mode in the candidate chrominance prediction mode set from a bitstream; and determining the chrominance prediction mode from the candidate chrominance prediction mode set based on the index.

According to the method in the twenty-seventh feasible implementation of the first aspect, in a twenty-eighth feasible implementation of the first aspect, the decoding an index of the chrominance prediction mode in the candidate chrominance prediction mode set from a bitstream includes: decoding the index based on the determined codeword of the candidate chrominance prediction mode in the candidate chrominance prediction mode set.

A beneficial effect of this embodiment of the present invention is as follows: Based on a reconstructed luminance unit, an improved candidate chrominance prediction mode set is constructed, and a chrominance prediction mode is selected by performing encoding by using an appropriate mode, thereby improving encoding efficiency.

A second aspect of the embodiments of the present invention provides a chrominance prediction apparatus, where a to-be-processed chrominance unit corresponds to one luminance processing unit, the luminance processing unit and the to-be-processed chrominance unit are respectively processing units of a luminance component and a chrominance component of a same image area, the luminance processing unit corresponds to one or more reconstructed luminance units, and the apparatus includes: a first determining module, configured to determine one or more target luminance prediction modes of the luminance processing unit from preset candidate luminance prediction modes, where a difference between a predicted luminance value, of the luminance processing unit, corresponding to any target luminance prediction mode and a reconstructed luminance value of the luminance processing unit is less than or equal to a difference between a predicted luminance value, of the luminance processing unit, corresponding to each candidate luminance prediction mode that is not determined as the target luminance prediction mode and the reconstructed luminance value of the luminance processing unit; and a first construction module, configured to obtain a predicted chrominance value of the to-be-processed chrominance unit, where a candidate chrominance prediction mode set of the to-be-processed chrominance unit includes the target luminance prediction mode.

According to the apparatus in the second aspect, in a first feasible implementation of the second aspect, the first determining module includes: a second determining module, configured to determine a candidate luminance prediction mode subset from the preset candidate luminance prediction modes; a first selection module, configured to select an initial prediction mode from the candidate luminance prediction mode subset; and an update module, configured to: when the initial prediction mode does not meet a preset condition, update the preset candidate luminance prediction modes based on the initial prediction mode, redetermine the candidate luminance prediction mode subset from the updated preset candidate luminance prediction modes, and reselect the initial prediction mode from the redetermined candidate luminance prediction mode subset, until the reselected initial prediction mode meets the preset condition; or when the initial prediction mode meets a preset condition, use the initial prediction mode as the target luminance prediction mode.

According to the apparatus in the first feasible implementation of the second aspect, in a second feasible implementation of the second aspect, the preset candidate luminance prediction modes include at least one of a prediction mode included in directional prediction modes and a prediction mode included in non-directional prediction modes, the directional prediction modes include a prediction mode that is at an angle of N degrees with a horizontal direction of a two-dimensional plane, N is a non-negative number less than 360, the non-directional prediction modes include a direct current prediction mode and a planar prediction mode, and the second determining module is specifically configured to: determine that the candidate luminance prediction mode subset is the same as the preset candidate luminance prediction modes; or determine that the candidate luminance prediction mode subset includes prediction modes selected from the directional prediction modes at a preset angle interval; or determine that the candidate luminance prediction mode subset includes prediction modes selected from the directional prediction modes at a preset angle interval and the non-directional prediction mode.

According to the apparatus in the first or the second feasible implementation of the second aspect, in a third feasible implementation of the second aspect, when the candidate luminance prediction mode subset includes only one candidate luminance prediction mode, the first selection module is specifically configured to determine that the candidate luminance prediction mode is the initial prediction mode; or when the candidate luminance prediction mode subset includes at least two candidate luminance prediction modes, the first selection module includes: a first calculation module, configured to calculate a difference between the reconstructed luminance value and each of candidate predicted luminance values corresponding to the candidate luminance prediction modes in the candidate luminance prediction mode subset; and a comparison module, configured to determine the initial prediction mode based on the difference, where a difference between a predicted luminance value, of the luminance processing unit, corresponding to any initial prediction mode and the reconstructed luminance value of the luminance processing unit is less than or equal to a difference between a predicted luminance value, of the luminance processing unit, corresponding to each candidate luminance prediction mode that is in the candidate luminance prediction mode subset and that is not determined as the initial prediction mode and the reconstructed luminance value of the luminance processing unit.

According to the apparatus in the third feasible implementation of the second aspect, in a fourth feasible implementation of the second aspect, the candidate predicted luminance value is a candidate predicted luminance value matrix, the reconstructed luminance value is a reconstructed luminance value matrix, and the first calculation module includes: a second calculation module, configured to separately calculate a difference between an element at a corresponding location in the candidate predicted luminance value matrix and an element at a corresponding location in the reconstructed luminance value matrix, to obtain a difference matrix; and a third determining module, configured to determine the difference based on the difference matrix.

According to the apparatus in the third feasible implementation of the second aspect, in a fifth feasible implementation of the second aspect, the third determining module is specifically configured to: accumulate absolute values of all elements in the difference matrix as the difference; or transform the difference matrix to obtain a transformed difference matrix, and accumulate absolute values of all elements in the transformed difference matrix as the difference; or sequentially transform, quantize, dequantize, and inversely transform the difference matrix to obtain a reconstructed difference matrix, and accumulate absolute values of all elements in the reconstructed difference matrix as the difference.

According to the apparatus in the fifth feasible implementation of the second aspect, in a sixth feasible implementation of the second aspect, the transform includes Hadamard transform, Haar transform, discrete cosine transform, or discrete sine transform; and correspondingly, the inverse transform includes inverse Hadamard transform corresponding to the Hadamard transform, inverse Haar transform corresponding to the Haar transform, inverse discrete cosine transform corresponding to the discrete cosine transform, or inverse discrete sine transform corresponding to the discrete sine transform.

According to the apparatus in any one of the first to the sixth feasible implementations of the second aspect, in a seventh feasible implementation of the second aspect, the update module is specifically configured to: determine that the updated candidate luminance prediction mode subset includes the initial prediction mode and prediction modes that have a preset angle difference from the initial prediction mode.

According to the apparatus in the seventh feasible implementation of the second aspect, in an eighth feasible implementation of the second aspect, the prediction modes that have the preset angle difference from the initial prediction mode include: M prediction modes that are adjacent to the initial prediction mode, where M is a positive number.

According to the apparatus in any one of the second aspect, or the first to the eighth feasible implementations of the second aspect, in a ninth feasible implementation of the second aspect, the preset condition includes: the initial prediction mode is the non-directional prediction mode; or each prediction mode that has the preset angle difference from the initial prediction mode exists in the candidate luminance prediction mode subset that is determined from the preset candidate luminance prediction modes or that is redetermined from the updated preset candidate luminance prediction modes; or a quantity of reselection times of the initial prediction mode reaches a preset quantity of times; or a difference corresponding to the initial prediction mode is less than a preset threshold.

According to the apparatus in any one of the second aspect, or the first to the ninth feasible implementations of the second aspect, in a tenth feasible implementation of the second aspect, the first construction module includes: a fourth determining module, configured to determine a candidate chrominance prediction mode set of the to-be-processed chrominance unit based on the target luminance prediction mode; a second selection module, configured to select a chrominance prediction mode of the to-be-processed chrominance unit from the candidate chrominance prediction mode set; and a fifth determining module, configured to determine the predicted chrominance value of the to-be-processed chrominance unit based on the chrominance prediction mode.

According to the apparatus in the tenth feasible implementation of the second aspect, in an eleventh feasible implementation of the second aspect, the fourth determining module is specifically configured to: determine that the candidate chrominance prediction mode set includes only the target luminance prediction mode.

According to the apparatus in the tenth feasible implementation of the second aspect, in a twelfth feasible implementation of the second aspect, the fourth determining module is specifically configured to: determine that the candidate chrominance prediction mode set includes the target luminance prediction mode and one or more preset candidate chrominance prediction modes.

According to the apparatus in the twelfth feasible implementation of the second aspect, in a thirteenth feasible implementation of the second aspect, the preset candidate chrominance prediction modes include at least one of a horizontal prediction mode, a vertical prediction mode, the direct current prediction mode, the planar prediction mode, and a direct prediction mode.

According to the apparatus in the twelfth or the thirteenth feasible implementation of the second aspect, in a fourteenth feasible implementation of the second aspect, the preset candidate chrominance prediction modes further include the directional prediction mode in a non-horizontal or non-vertical direction, or a linear prediction mode.

According to the apparatus in any one of the tenth to the fourteenth feasible implementations of the second aspect, in a fifteenth feasible implementation of the second aspect, the first construction module further includes: a sixth determining module, configured to determine a codeword of a candidate chrominance prediction mode in the candidate chrominance prediction mode set.

According to the apparatus in the fifteenth feasible implementation of the second aspect, in a sixteenth feasible implementation of the second aspect, the sixth determining module is specifically configured to: determine the codeword of the candidate chrominance prediction mode in the candidate chrominance prediction mode set by using a variable-length code.

According to the apparatus in the sixteenth feasible implementation of the second aspect, in a seventeenth feasible implementation of the second aspect, a prediction mode corresponding to a candidate predicted luminance value that is of the luminance processing unit and that has a smallest difference from the reconstructed luminance value of the luminance processing unit is used as a first target luminance prediction mode, and the sixth determining module is specifically configured to: when the candidate chrominance prediction mode set includes the first target luminance prediction mode, the linear prediction mode, and the direct prediction mode, assign a smallest codeword to the linear prediction mode, assign, to the first target luminance prediction mode, a smallest codeword other than the codeword used to represent the linear prediction mode, and assign, to the direct prediction mode, a smallest codeword other than the codewords used to represent the linear prediction mode and the first target luminance prediction mode; or when the candidate chrominance prediction mode set includes the first target luminance prediction mode, the linear prediction mode, and the direct prediction mode, assign a smallest codeword to the first target luminance prediction mode, assign, to the linear prediction mode, a smallest codeword other than the codeword used to represent the first target luminance prediction mode, and assign, to the direct prediction mode, a smallest codeword other than the codewords used to represent the linear prediction mode and the first target luminance prediction mode; or when the candidate chrominance prediction mode set includes the first target luminance prediction mode and the direct prediction mode, assign a smallest codeword to the first target luminance prediction mode, and assign, to the direct prediction mode, a smallest codeword other than the codeword used to represent the first target luminance prediction mode.

According to the apparatus in the sixteenth or the seventeenth feasible implementation of the second aspect, in an eighteenth feasible implementation of the second aspect, the sixth determining module further includes: a seventh determining module, configured to determine a length of the variable-length code based on a quantity of the candidate chrominance prediction modes; and an operation module, configured to: when the quantity of the candidate chrominance prediction modes changes, increase or decrease the length of the variable-length code by one or more bits.

According to the apparatus in any one of the second aspect, or the first to the eighteenth feasible implementations of the second aspect, in a nineteenth feasible implementation of the second aspect, the apparatus further includes: an eighth determining module, configured to determine that the preset candidate luminance prediction modes include a candidate luminance prediction mode set, where the candidate luminance prediction mode set includes the directional prediction mode and the non-directional prediction mode; or determine that the preset candidate luminance prediction modes include luminance prediction modes of the one or more reconstructed luminance units corresponding to the luminance processing unit; or determine that the preset candidate luminance prediction modes include chrominance prediction modes of reconstructed chrominance units in a neighborhood of the to-be-processed chrominance unit.

According to the apparatus in the nineteenth feasible implementation of the second aspect, in a twentieth feasible implementation of the second aspect, the eighth determining module is specifically configured to: determine that the preset candidate luminance prediction modes include luminance prediction modes that are correlated to the luminance prediction modes of the one or more reconstructed luminance units.

According to the apparatus in the twentieth feasible implementation of the second aspect, in a twenty-first feasible implementation of the second aspect, for the luminance prediction modes that are correlated to the luminance prediction modes of the one or more reconstructed luminance units: when the luminance prediction mode is the directional prediction mode, the correlated luminance prediction modes include P prediction modes adjacent to the luminance prediction modes of the one or more reconstructed luminance units, where P is a positive number; or when the luminance prediction mode is the directional prediction mode, the correlated luminance prediction modes include Q prediction modes adjacent to the luminance prediction modes of the one or more reconstructed luminance units and include the non-directional prediction mode, where Q is a positive number; or when the luminance prediction mode is the non-directional prediction mode, the correlated luminance prediction modes include the preset directional prediction mode.

According to the apparatus in any one of the nineteenth to the twenty-first feasible implementations of the second aspect, in a twenty-second feasible implementation of the second aspect, the chrominance prediction modes of the reconstructed chrominance units in the neighborhood of the to-be-processed chrominance unit include: chrominance prediction modes of reconstructed chrominance units that are adjacent to the top, the left, the upper left, the upper right, and the lower left of the to-be-processed chrominance unit.

According to the apparatus in any one of the second aspect, or the first to the twenty-second feasible implementations of the second aspect, in a twenty-third feasible implementation of the second aspect, the apparatus further includes: a downsampling module, configured to perform downsampling on the luminance processing unit; and correspondingly, the first determining module is configured to determine one or more target luminance prediction modes of the downsampled luminance processing unit from the preset candidate luminance prediction modes.

According to the apparatus in the twenty-third feasible implementation of the second aspect, in a twenty-fourth feasible implementation of the second aspect, the downsampling module is specifically configured to: perform downsampling on the luminance processing unit by using a filter whose filtering coefficient is $\begin{bmatrix} \frac{1}{8} & \frac{1}{4} & \frac{1}{8} \\ \frac{1}{8} & \frac{1}{4} & \frac{1}{8} \end{bmatrix}$ ; or perform

downsampling on the luminance processing unit by using a filter whose filtering coefficient is $\begin{bmatrix} 1 & 0 \\ 0 & 0 \end{bmatrix}$ ; or perform

downsampling on the luminance processing unit by using a filter whose filtering coefficient is $\begin{bmatrix} \frac{1}{2} & 0 \\ \frac{1}{2} & 0 \end{bmatrix}$ ; or perform

downsampling on the luminance processing unit by using a filter whose filtering coefficient is $\begin{bmatrix} \frac{1}{4} & \frac{1}{4} \\ \frac{1}{4} & \frac{1}{4} \end{bmatrix}$ .

According to the apparatus in any one of the tenth to the twenty-fourth feasible implementations of the second aspect, in a twenty-fifth feasible implementation of the second aspect, the apparatus is configured to encode the to-be-processed chrominance unit, and the second selection module includes: a ninth determining module, configured to traverse candidate chrominance prediction modes in the candidate chrominance prediction mode set to obtain corresponding candidate predicted chrominance values; a third calculation module, configured to calculate encoding costs of each candidate chrominance prediction mode based on an original value of the to-be-processed chrominance unit and the candidate predicted chrominance values obtained through the traversing; a tenth determining module, configured to determine a candidate chrominance prediction mode with smallest encoding costs as the chrominance prediction mode of the to-be-processed chrominance unit; and an encoding module, configured to encode an index of the chrominance prediction mode in the candidate chrominance prediction mode set.

According to the apparatus in the twenty-fifth feasible implementation of the second aspect, in a twenty-sixth feasible implementation of the second aspect, the encoding module is specifically configured to: encode the index based on the determined codeword of the candidate chrominance prediction mode in the candidate chrominance prediction mode set.

According to the apparatus in any one of the tenth to the twenty-fourth feasible implementations of the second aspect, in a twenty-seventh feasible implementation of the second aspect, the apparatus is configured to decode the to-be-processed chrominance unit, and the second selection module includes: a decoding module, configured to decode an index of the chrominance prediction mode in the candidate chrominance prediction mode set from a bitstream; and an eleventh determining module, configured to determine the chrominance prediction mode from the candidate chrominance prediction mode set based on the index.

According to the apparatus in the twenty-seventh feasible implementation of the second aspect, in a twenty-eighth feasible implementation of the second aspect, the decoding module is specifically configured to: decode the index based on the determined codeword of the candidate chrominance prediction mode in the candidate chrominance prediction mode set.

A third aspect of the embodiments of the present invention provides a computer storage medium, configured to store a computer software instruction used to implement the method according to the first aspect, where the instruction includes a program used to perform the chrominance prediction method designed in the first aspect.

A fourth aspect of the embodiments of the present invention provides an apparatus, including a memory and a processor coupled to the memory, where the processor is configured to perform the chrominance prediction method designed in the first aspect.

A fifth aspect of the embodiments of the present invention provides a first-chrominance prediction method, where a to-be-processed first-chrominance unit corresponds to one second-chrominance processing unit, the second-chrominance processing unit and the to-be-processed first-chrominance unit are respectively processing units of a second-chrominance component and a first-chrominance component of a same image area, the second-chrominance processing unit corresponds to one or more reconstructed second-chrominance units, and the method includes: determining one or more target second-chrominance prediction modes of the second-chrominance processing unit from preset candidate second-chrominance prediction modes, where a difference between a predicted second-chrominance value, of the second-chrominance processing unit, corresponding to any one of the target second-chrominance prediction modes and a reconstructed second-chrominance value of the second-chrominance processing unit is less than or equal to a difference between a predicted second-chrominance value, of the second-chrominance processing unit, corresponding to each candidate second-chrominance prediction mode that is not determined as the target second-chrominance prediction mode and the reconstructed second-chrominance value of the second-chrominance processing unit; and obtaining a predicted first-chrominance value of the to-be-processed first-chrominance unit, where a candidate first-chrominance prediction mode set of the to-be-processed first-chrominance unit includes the target second-chrominance prediction mode.

According to the method in the fifth aspect, in a first feasible implementation of the fifth aspect, the determining one or more target second-chrominance prediction modes of the second-chrominance processing unit from preset candidate second-chrominance prediction modes includes: determining a candidate second-chrominance prediction mode subset from the preset candidate second-chrominance prediction modes; selecting an initial prediction mode from the candidate second-chrominance prediction mode subset; and when the initial prediction mode does not meet a preset condition, updating the preset candidate second-chrominance prediction modes based on the initial prediction mode, redetermining the candidate second-chrominance prediction mode subset from the updated preset candidate second-chrominance prediction modes, and reselecting the initial prediction mode from the redetermined candidate second-chrominance prediction mode subset, until the reselected initial prediction mode meets the preset condition; or when the initial prediction mode meets a preset condition, using the initial prediction mode as the target second-chrominance prediction mode.

A beneficial effect of this embodiment of the present invention is as follows: Through iterative searches, an operation amount required for finding an optimal prediction mode is reduced, processing efficiency is improved, and a processing time is reduced.

According to the method in the first feasible implementation of the fifth aspect, in a second feasible implementation of the fifth aspect, the preset candidate second-chrominance prediction modes include at least one of a prediction mode included in directional prediction modes and a prediction mode included in non-directional prediction modes, the directional prediction modes include a prediction mode that is at an angle of N degrees with a horizontal direction of a two-dimensional plane, N is a non-negative number less than 360, the non-directional prediction modes include a direct current prediction mode, a planar prediction mode, and a linear prediction mode, and the determining a candidate second-chrominance prediction mode subset from the preset candidate second-chrominance prediction modes includes: determining that the candidate second-chrominance prediction mode subset is the same as the preset candidate second-chrominance prediction modes; or determining that the candidate second-chrominance prediction mode subset includes prediction modes selected from the directional prediction modes at a preset angle interval; or determining that the candidate second-chrominance prediction mode subset includes prediction modes selected from the directional prediction modes at a preset angle interval and the non-directional prediction mode.

According to the method in the first or the second feasible implementation of the fifth aspect, in a third feasible implementation of the fifth aspect, the selecting an initial prediction mode from the candidate second-chrominance prediction mode subset includes: when the candidate second-chrominance prediction mode subset includes only one candidate second-chrominance prediction mode, determining that the candidate second-chrominance prediction mode is the initial prediction mode; or when the candidate second-chrominance prediction mode subset includes at least two candidate second-chrominance prediction modes, calculating a difference between the reconstructed second-chrominance value and each of candidate predicted second-chrominance values corresponding to the candidate second-chrominance prediction modes in the candidate second-chrominance prediction mode subset, and determining the initial prediction mode based on the difference, where a difference between a predicted second-chrominance value, of the second-chrominance processing unit, corresponding to any initial prediction mode and the reconstructed second-chrominance value of the second-chrominance processing unit is less than or equal to a difference between a predicted second-chrominance value, of the second-chrominance processing unit, corresponding to each candidate second-chrominance prediction mode that is in the candidate second-chrominance prediction mode subset and that is not determined as the initial prediction mode and the reconstructed second-chrominance value of the second-chrominance processing unit.

According to the method in the third feasible implementation of the fifth aspect, in a fourth feasible implementation of the fifth aspect, the candidate predicted second-chrominance value is a candidate predicted second-chrominance value matrix, the reconstructed second-chrominance value is a reconstructed second-chrominance value matrix, and the calculating a difference between the reconstructed second-chrominance value and each of candidate predicted second-chrominance values corresponding to the candidate second-chrominance prediction modes in the candidate second-chrominance prediction mode subset includes: separately calculating a difference between an element at a corresponding location in the candidate predicted second-chrominance value matrix and an element at a corresponding location in the reconstructed second-chrominance value matrix, to obtain a difference matrix; and determining the difference based on the difference matrix.

According to the method in the fourth feasible implementation of the fifth aspect, in a fifth feasible implementation of the fifth aspect, the determining the difference based on the difference matrix includes: accumulating absolute values of all elements in the difference matrix as the difference; or transforming the difference matrix to obtain a transformed difference matrix, and accumulating absolute values of all elements in the transformed difference matrix as the difference; or sequentially transforming, quantizing, dequantizing, and inversely transforming the difference matrix to obtain a reconstructed difference matrix, and accumulating absolute values of all elements in the reconstructed difference matrix as the difference.

A beneficial effect of this embodiment of the present invention is that different calculation manners may be selected based on different complexity and performance requirements, and the different calculation manners are suitable for different application scenarios.

According to the method in the fifth feasible implementation of the fifth aspect, in a sixth feasible implementation of the fifth aspect, the transform includes Hadamard transform, Haar transform, discrete cosine transform, or discrete sine transform; and correspondingly, the inverse transform includes inverse Hadamard transform corresponding to the Hadamard transform, inverse Haar transform corresponding to the Haar transform, inverse discrete cosine transform corresponding to the discrete cosine transform, or inverse discrete sine transform corresponding to the discrete sine transform.

A beneficial effect of this embodiment of the present invention is that different transform manners may be selected based on different complexity and performance requirements, and the different transform manners are suitable for different application scenarios.

According to the method in any one of the first to the sixth feasible implementations of the fifth aspect, in a seventh feasible implementation of the fifth aspect, the updating the candidate second-chrominance prediction mode subset based on the initial prediction mode includes: determining that the updated candidate second-chrominance prediction mode subset includes the initial prediction mode and prediction modes that have a preset angle difference from the initial prediction mode.

According to the method in the seventh feasible implementation of the fifth aspect, in an eighth feasible implementation of the fifth aspect, the prediction modes that have the preset angle difference from the initial prediction mode include: M prediction modes that are adjacent to the initial prediction mode, where M is a positive number.

According to the method in any one of the first to the eighth feasible implementations of the fifth aspect, in a ninth feasible implementation of the fifth aspect, the preset condition includes: the initial prediction mode is the non-directional prediction mode; or each prediction mode that has the preset angle difference from the initial prediction mode exists in the candidate second-chrominance prediction mode subset that is determined from the preset candidate second-chrominance prediction modes or that is redetermined from the updated preset candidate second-chrominance prediction modes; or a quantity of reselection times of the initial prediction mode reaches a preset quantity of times; or a difference corresponding to the initial prediction mode is less than a preset threshold.

A beneficial effect of this embodiment of the present invention is that different iteration termination conditions may be selected based on different complexity and performance requirements, and the different iteration termination conditions are suitable for different application scenarios.

According to the method in any one of the fifth aspect, or the first to the ninth feasible implementations of the fifth aspect, in a tenth feasible implementation of the fifth aspect, the obtaining a predicted first-chrominance value of the to-be-processed first-chrominance unit includes: determining a candidate first-chrominance prediction mode set of the to-be-processed first-chrominance unit based on the target second-chrominance prediction mode; selecting a first-chrominance prediction mode of the to-be-processed first-chrominance unit from the candidate first-chrominance prediction mode set; and determining the predicted first-chrominance value of the to-be-processed first-chrominance unit based on the first-chrominance prediction mode.

According to the method in the tenth feasible implementation of the fifth aspect, in an eleventh feasible implementation of the fifth aspect, the determining a candidate first-chrominance prediction mode set of the to-be-processed first-chrominance unit based on the target second-chrominance prediction mode includes: determining that the candidate first-chrominance prediction mode set includes only the target second-chrominance prediction mode.

A beneficial effect of this embodiment of the present invention is that the candidate first-chrominance prediction mode includes only the target second-chrominance prediction mode, thereby reducing a code rate of an encoding mode.

According to the method in the tenth feasible implementation of the fifth aspect, in a twelfth feasible implementation of the fifth aspect, the determining a candidate first-chrominance prediction mode set of the to-be-processed first-chrominance unit based on the target second-chrominance prediction mode includes: determining that the candidate first-chrominance prediction mode set includes the target second-chrominance prediction mode and one or more preset candidate first-chrominance prediction modes.

A beneficial effect of this embodiment of the present invention is that another preset prediction mode is added to the candidate first-chrominance prediction mode, thereby avoiding impact exerted on encoding performance when the target second-chrominance prediction mode is misjudged.

According to the method in the twelfth feasible implementation of the fifth aspect, in a thirteenth feasible implementation of the fifth aspect, the preset candidate first-chrominance prediction modes include at least one of a horizontal prediction mode, a vertical prediction mode, the direct current prediction mode, the planar prediction mode, and a direct prediction mode.

According to the method in the twelfth or the thirteenth feasible implementation of the fifth aspect, in a fourteenth feasible implementation of the fifth aspect, the candidate first-chrominance prediction modes further include the directional prediction mode in a non-horizontal or non-vertical direction, or a linear prediction mode.

According to the method in any one of the tenth to the fourteenth feasible implementations of the fifth aspect, in a fifteenth feasible implementation of the fifth aspect, after the determining a candidate first-chrominance prediction mode set of the to-be-processed first-chrominance unit, the method further includes: determining a codeword of a candidate first-chrominance prediction mode in the candidate first-chrominance prediction mode set.

A beneficial effect of this embodiment of the present invention is that the codeword of the candidate first-chrominance prediction mode is adjusted based on a probability that each candidate first-chrominance prediction mode in the candidate first-chrominance prediction mode set is selected, so that encoding performance can be further improved.

According to the method in the fifteenth feasible implementation of the fifth aspect, in a sixteenth feasible implementation of the fifth aspect, the determining a codeword of a candidate first-chrominance prediction mode in the candidate first-chrominance prediction mode set includes: determining the codeword of the candidate first-chrominance prediction mode in the candidate first-chrominance prediction mode set by using a variable-length code.

According to the method in the sixteenth feasible implementation of the fifth aspect, in a seventeenth feasible implementation of the fifth aspect, a prediction mode corresponding to a candidate predicted second-chrominance value that is of the second-chrominance processing unit and that has a smallest difference from the reconstructed second-chrominance value of the second-chrominance processing unit is used as a first target second-chrominance prediction mode, and the determining the codeword of the candidate first-chrominance prediction mode in the candidate first-chrominance prediction mode set by using a variable-length code includes: when the candidate first-chrominance prediction mode set includes the first target second-chrominance prediction mode, the linear prediction mode, and the direct prediction mode, assigning a smallest codeword to the linear prediction mode, assigning, to the first target second-chrominance prediction mode, a smallest codeword other than the codeword used to represent the linear prediction mode, and assigning, to the direct prediction mode, a smallest codeword other than the codewords used to represent the linear prediction mode and the first target second-chrominance prediction mode; or when the candidate first-chrominance prediction mode set includes the first target second-chrominance prediction mode, the linear prediction mode, and the direct prediction mode, assigning a smallest codeword to the first target second-chrominance prediction mode, assigning, to the linear prediction mode, a smallest codeword other than the codeword used to represent the first target second-chrominance prediction mode, and assigning, to the direct prediction mode, a smallest codeword other than the codewords used to represent the linear prediction mode and the first target second-chrominance prediction mode; or when the candidate first-chrominance prediction mode set includes the first target second-chrominance prediction mode and the direct prediction mode, assigning a smallest codeword to the first target second-chrominance prediction mode, and assigning, to the direct prediction mode, a smallest codeword other than the codeword used to represent the first target second-chrominance prediction mode.

A beneficial effect of this embodiment of the present invention is that a relatively short codeword is assigned to a candidate first-chrominance prediction mode with a high probability that each candidate first-chrominance prediction mode in the candidate first-chrominance prediction mode set is selected, so that encoding performance can be further improved.

According to the method in the sixteenth or seventeenth feasible implementation of the fifth aspect, in an eighteenth feasible implementation of the fifth aspect, the determining the codeword of the candidate first-chrominance prediction mode in the candidate first-chrominance prediction mode set by using a variable-length code further includes: determining a length of the variable-length code based on a quantity of the candidate first-chrominance prediction modes; and when the quantity of the candidate first-chrominance prediction modes changes, increasing or decreasing the length of the variable-length code by one or more bits.

According to the method in any one of the fifth aspect, or the first to the eighteenth feasible implementations of the fifth aspect, in a nineteenth feasible implementation of the fifth aspect, before the determining one or more target second-chrominance prediction modes of the second-chrominance processing unit from preset candidate second-chrominance prediction modes, the method further includes: determining that the preset candidate second-chrominance prediction modes include a candidate second-chrominance prediction mode set, where the candidate second-chrominance prediction mode set includes the directional prediction mode and the non-directional prediction mode; or determining that the preset candidate second-chrominance prediction modes include second-chrominance prediction modes of the one or more reconstructed second-chrominance units corresponding to the second-chrominance processing unit; or determining that the preset candidate second-chrominance prediction modes include first-chrominance prediction modes of reconstructed first-chrominance units in a neighborhood of the to-be-processed first-chrominance unit.

A beneficial effect of this embodiment of the present invention is that prediction modes with relatively strong correlation are selected as the candidate second-chrominance prediction modes to participate in searches, thereby improving search efficiency and increasing a search speed.

According to the method in the nineteenth feasible implementation of the fifth aspect, in a twentieth feasible implementation of the fifth aspect, the determining that the preset candidate second-chrominance prediction modes include second-chrominance prediction modes of the one or more reconstructed second-chrominance units corresponding to the second-chrominance processing unit further includes: determining that the preset candidate second-chrominance prediction modes include second-chrominance prediction modes that are correlated to the second-chrominance prediction modes of the one or more reconstructed second-chrominance units.

According to the method in the twentieth feasible implementation of the fifth aspect, in a twenty-first feasible implementation of the fifth aspect, for the second-chrominance prediction modes that are correlated to the second-chrominance prediction modes of the one or more reconstructed second-chrominance units: when the second-chrominance prediction mode is the directional prediction mode, the correlated second-chrominance prediction modes include $P$ prediction modes adjacent to the second-chrominance prediction modes of the one or more reconstructed second-chrominance units, where $P$ is a positive number; or when the second-chrominance prediction mode is the directional prediction mode, the correlated second-chrominance prediction modes include $Q$ prediction modes adjacent to the second-chrominance prediction modes of the one or more reconstructed second-chrominance units and include the non-directional prediction mode, where $Q$ is a positive number; or when the second-chrominance prediction mode is the non-directional prediction mode, the correlated second-chrominance prediction modes include the preset directional prediction mode.

According to the method in any one of the nineteenth to the twenty-first feasible implementations of the fifth aspect, in a twenty-second feasible implementation of the fifth aspect, the first-chrominance prediction modes of the reconstructed first-chrominance units in the neighborhood of the to-be-processed first-chrominance unit include: first-chrominance prediction modes of reconstructed first-chrominance units that are adjacent to the top, the left, the upper left, the upper right, and the lower left of the to-be-processed first-chrominance unit.

According to the method in any one of the fifth aspect, or the first to the twenty-second feasible implementations of the fifth aspect, in a twenty-third feasible implementation of the fifth aspect, before the determining one or more target second-chrominance prediction modes of the second-chrominance processing unit from preset candidate second-chrominance prediction modes, the method further includes: performing downsampling on the second-chrominance processing unit; and correspondingly, the determining one or more target second-chrominance prediction modes of the second-chrominance processing unit from preset candidate second-chrominance prediction modes includes: determining one or more target second-chrominance prediction modes of the downsampled second-chrominance processing unit from the preset candidate second-chrominance prediction modes.

A beneficial effect of this embodiment of the present invention is that because downsampling is performed on the second-chrominance processing unit, operation complexity is reduced, and the downsampled second-chrominance processing unit can more closely reflect a prediction direction of a first-chrominance unit.

According to the method in the twenty-third feasible implementation of the fifth aspect, in a twenty-fourth feasible implementation of the fifth aspect, the performing downsampling on the second-chrominance processing unit includes: performing downsampling on the second-chrominance processing unit by using a filter whose filtering coefficient is

$$\begin{bmatrix} \frac{1}{8} & \frac{1}{4} & \frac{1}{8} \\ \frac{1}{8} & \frac{1}{4} & \frac{1}{8} \end{bmatrix}$$ ; or performing downsampling on the second-chrominance processing unit by using a filter whose filtering

coefficient is $\begin{bmatrix} 1 & 0 \\ 0 & 0 \end{bmatrix}$ ; or performing downsampling on the second-chrominance processing unit by using a filter whose

filtering coefficient is $\begin{bmatrix} \frac{1}{2} & 0 \\ \frac{1}{2} & 0 \end{bmatrix}$ ; or performing downsampling on the second-chrominance processing unit by using a filter whose filtering coefficient is $\begin{bmatrix} \frac{1}{4} & \frac{1}{4} \\ \frac{1}{4} & \frac{1}{4} \end{bmatrix}$ .

A beneficial effect of this embodiment of the present invention is that different filters may be selected based on different complexity and performance requirements, and the different filters are suitable for different application scenarios.

According to the method in any one of the tenth to the twenty-fourth feasible implementations of the fifth aspect, in a twenty-fifth feasible implementation of the fifth aspect, the method is used to encode the to-be-processed first-chrominance unit, and the selecting a first-chrominance prediction mode of the to-be-processed first-chrominance unit from the candidate first-chrominance prediction mode set includes: traversing candidate first-chrominance prediction modes in the candidate first-chrominance prediction mode set to obtain corresponding candidate predicted second-chrominance values; calculating encoding costs of each candidate first-chrominance prediction mode based on an original value of the to-be-processed first-chrominance unit and the candidate predicted second-chrominance values obtained through the traversing; determining a candidate first-chrominance prediction mode with smallest encoding costs as the first-chrominance prediction mode of the to-be-processed first-chrominance unit; and encoding an index of the first-chrominance prediction mode in the candidate first-chrominance prediction mode set.

According to the method in the twenty-fifth feasible implementation of the fifth aspect, in a twenty-sixth feasible implementation of the fifth aspect, the encoding an index of the first-chrominance prediction mode in the candidate first-chrominance prediction mode set includes: encoding the index based on the determined codeword of the candidate first-chrominance prediction mode in the candidate first-chrominance prediction mode set.

According to the method in any one of the tenth to the twenty-fourth feasible implementations of the fifth aspect, in a twenty-seventh feasible implementation of the fifth aspect, the method is used to decode the to-be-processed first-chrominance unit, and the selecting a first-chrominance prediction mode of the to-be-processed first-chrominance unit from the candidate first-chrominance prediction mode set includes: decoding an index of the first-chrominance prediction mode in the candidate first-chrominance prediction mode set from a bitstream; and determining the first-chrominance prediction mode from the candidate first-chrominance prediction mode set based on the index.

According to the method in the twenty-seventh feasible implementation of the fifth aspect, in a twenty-eighth feasible implementation of the fifth aspect, the decoding an index of the first-chrominance prediction mode in the candidate first-chrominance prediction mode set from a bitstream includes: decoding the index based on the determined codeword of the candidate first-chrominance prediction mode in the candidate first-chrominance prediction mode set.

A sixth aspect of the embodiments of the present invention provides a first-chrominance prediction method, where a to-be-processed first-chrominance unit corresponds to one second-chrominance processing unit, the second-chrominance processing unit and the to-be-processed first-chrominance unit are respectively processing units of a second-chrominance component and a first-chrominance component of a same image area, the second-chrominance processing unit corresponds to one or more reconstructed second-chrominance units, and the method includes: determining a candidate predicted second-chrominance value that is of the second-chrominance processing unit and that has a smallest difference from a reconstructed second-chrominance value of the second-chrominance processing unit, where any candidate predicted second-chrominance value corresponds to one candidate second-chrominance prediction mode; and obtaining a predicted first-chrominance value of the to-be-processed first-chrominance unit based on a target second-chrominance prediction mode, where the target second-chrominance prediction mode includes a candidate second-chrominance prediction mode corresponding to the candidate predicted second-chrominance value.

According to the method in the sixth aspect, in a first feasible implementation of the sixth aspect, the determining a candidate predicted second-chrominance value that is of the second-chrominance processing unit and that has a smallest difference from a reconstructed second-chrominance value of the second-chrominance processing unit includes: iteratively determining an initial prediction mode from preset candidate second-chrominance prediction modes until the initial prediction mode meets a preset condition, where the initial prediction mode that meets the preset condition corresponds to the candidate predicted second-chrominance value.

According to the method in the first feasible implementation of the sixth aspect, in a second feasible implementation of the sixth aspect, the iteratively determining an initial prediction mode includes: determining a candidate second-chrominance prediction mode subset from the preset candidate second-chrominance prediction modes; selecting the initial prediction mode from the candidate second-chrominance prediction mode subset; and when the initial prediction mode does not meet the preset condition, updating the preset candidate second-chrominance prediction modes based on the initial prediction mode.

According to the method in the second feasible implementation of the sixth aspect, in a third feasible implementation of the sixth aspect, the preset candidate second-chrominance prediction modes include at least one of a prediction mode included in directional prediction modes and a prediction mode included in non-directional prediction modes, the directional prediction modes include a prediction mode that is at an angle of N degrees with a horizontal direction of a two-dimensional plane, N is a non-negative number less than 360, the non-directional prediction modes include a direct current prediction mode, a planar prediction mode, and a linear prediction mode, and the determining a candidate second-chrominance prediction mode subset from the preset candidate second-chrominance prediction modes includes: determining that the candidate second-chrominance prediction mode subset is the same as the preset candidate second-chrominance prediction modes; or determining that the candidate second-chrominance prediction mode subset includes prediction modes selected from the directional prediction modes at a preset angle interval; or determining that the candidate second-chrominance prediction mode subset includes prediction modes selected from the directional prediction modes at a preset angle interval and the non-directional prediction mode.

According to the method in the third feasible implementation of the sixth aspect, in a fourth feasible implementation of the sixth aspect, the selecting the initial prediction mode from the candidate second-chrominance prediction mode subset includes: calculating at least two differences between the reconstructed second-chrominance value and candidate predicted second-chrominance values corresponding to at least two candidate second-chrominance prediction modes in the candidate second-chrominance prediction mode subset; and comparing the at least two differences to determine that the initial prediction mode includes a candidate second-chrominance prediction mode corresponding to a smallest difference.

According to the method in the fourth feasible implementation of the sixth aspect, in a fifth feasible implementation of the sixth aspect, the candidate predicted second-chrominance value is a candidate predicted second-chrominance value matrix, the reconstructed second-chrominance value is a reconstructed second-chrominance value matrix, and the calculating at least two differences between the reconstructed second-chrominance value and candidate predicted second-chrominance values corresponding to at least two candidate second-chrominance prediction modes in the candidate second-chrominance prediction mode subset includes: separately calculating a difference between an element at a corresponding location in each of at least two candidate predicted second-chrominance value matrices and an element at a corresponding location in the reconstructed second-chrominance value matrix, to obtain difference matrices; and determining the differences based on the difference matrices.

According to the method in the fifth feasible implementation of the sixth aspect, in a sixth feasible implementation of the sixth aspect, the determining the differences based on the difference matrices includes: accumulating absolute values of all elements in the difference matrices as the differences; or transforming the difference matrices to obtain transformed difference matrices, and accumulating absolute values of all elements in the transformed difference matrices as the differences; or sequentially transforming, quantizing, dequantizing, and inversely transforming the difference matrices to obtain reconstructed difference matrices, and accumulating absolute values of all elements in the reconstructed difference matrices as the differences.

According to the method in the sixth feasible implementation of the sixth aspect, in a seventh feasible implementation of the sixth aspect, the transform includes Hadamard transform, Haar transform, discrete cosine transform, or discrete sine transform; and correspondingly, the inverse transform includes inverse Hadamard transform corresponding to the Hadamard transform, inverse Haar transform corresponding to the Haar transform, inverse discrete cosine transform corresponding to the discrete cosine transform, or inverse discrete sine transform corresponding to the discrete sine transform.

According to the method in any one of the second to the seventh feasible implementations of the sixth aspect, in an eighth feasible implementation of the sixth aspect, the updating the candidate second-chrominance prediction mode subset based on the initial prediction mode includes: determining that the updated candidate second-chrominance prediction mode subset includes the initial prediction mode and prediction modes that have a preset angle difference from the initial prediction mode.

According to the method in the eighth feasible implementation of the sixth aspect, in a ninth feasible implementation of the sixth aspect, the prediction modes that have the preset angle difference from the initial prediction mode include: M prediction modes that are adjacent to the initial prediction mode, where M is a positive number.

According to the method in any one of the first to the ninth feasible implementations of the sixth aspect, in a tenth feasible implementation of the sixth aspect, the preset condition includes: the initial prediction mode is the non-directional prediction mode; or each prediction mode that has the preset angle difference from the initial prediction mode exists in any candidate second-chrominance prediction mode subset in the iteration; or a quantity of reselection times of the initial prediction mode reaches a preset quantity of times; or a difference corresponding to the initial prediction mode is less than a preset threshold.

According to the method in any one of the sixth aspect, or the first to the tenth feasible implementations of the sixth aspect, in an eleventh feasible implementation of the sixth aspect, the obtaining a predicted first-chrominance value of the to-be-processed first-chrominance unit based on a target second-chrominance prediction mode includes: using the target second-chrominance prediction mode as a first-chrominance prediction mode of the to-be-processed first-chrominance unit; and determining the predicted first-chrominance value of the to-be-processed first-chrominance unit based on the first-chrominance prediction mode.

According to the method in any one of the sixth aspect, or the first to the eleventh feasible implementations of the sixth aspect, in a twelfth feasible implementation of the sixth aspect, before the determining a candidate predicted second-chrominance value that is of the second-chrominance processing unit and that has a smallest difference from a reconstructed second-chrominance value of the second-chrominance processing unit, the method further includes: determining that the preset candidate second-chrominance prediction modes include a candidate second-chrominance prediction mode set, where the candidate second-chrominance prediction mode set includes the directional prediction mode and the non-directional prediction mode; or determining that the preset candidate second-chrominance prediction modes include second-chrominance prediction modes of the one or more reconstructed second-chrominance units corresponding to the second-chrominance processing unit; or determining that the preset candidate second-chrominance prediction modes include first-chrominance prediction modes of reconstructed first-chrominance units in a neighborhood of the to-be-processed first-chrominance unit.

According to the method in the twelfth feasible implementation of the sixth aspect, in a thirteenth feasible implementation of the sixth aspect, the determining that the preset candidate second-chrominance prediction modes include second-chrominance prediction modes of the one or more reconstructed second-chrominance units corresponding to the second-chrominance processing unit further includes: determining that the preset candidate second-chrominance prediction modes include second-chrominance prediction modes that are correlated to the second-chrominance prediction modes of the one or more reconstructed second-chrominance units.

According to the method in the thirteenth feasible implementation of the sixth aspect, in a fourteenth feasible implementation of the sixth aspect, for the second-chrominance prediction modes that are correlated to the second-chrominance prediction modes of the one or more reconstructed second-chrominance units: when the second-chrominance prediction mode is the directional prediction mode, the correlated second-chrominance prediction modes include P prediction modes adjacent to the second-chrominance prediction modes of the one or more reconstructed second-chrominance units, where P is a positive number; or when the second-chrominance prediction mode is the directional prediction mode, the correlated second-chrominance prediction modes include Q prediction modes adjacent to the second-chrominance prediction modes of the one or more reconstructed second-chrominance units and include the non-directional prediction mode, where Q is a positive number; or when the second-chrominance prediction mode is the non-directional prediction mode, the correlated second-chrominance prediction modes include the preset directional prediction mode.

According to the method in any one of the twelfth to the fourteenth feasible implementations of the sixth aspect, in a fifteenth feasible implementation of the sixth aspect, the first-chrominance prediction modes of the reconstructed first-chrominance units in the neighborhood of the to-be-processed first-chrominance unit include: first-chrominance prediction modes of reconstructed first-chrominance units that are adjacent to the top, the left, the upper left, the upper right, and the lower left of the to-be-processed first-chrominance unit.

According to the method in any one of the sixth aspect, or the first to the fifteenth feasible implementations of the sixth aspect, in a sixteenth feasible implementation of the sixth aspect, before the determining a candidate predicted second-chrominance value that is of the second-chrominance processing unit and that has a smallest difference from a reconstructed second-chrominance value of the second-chrominance processing unit, the method further includes: performing downsampling on the second-chrominance processing unit; and correspondingly, the determining a candidate predicted second-chrominance value that is of the second-chrominance processing unit and that has a smallest difference from a reconstructed second-chrominance value of the second-chrominance processing unit includes: determining one or more candidate predicted second-chrominance values of the downsampled second-chrominance processing unit that have a smallest difference from a reconstructed second-chrominance value of the downsampled second-chrominance processing unit.

According to the method in the sixteenth feasible implementation of the sixth aspect, in a seventeenth feasible implementation of the sixth aspect, the performing downsampling on the second-chrominance processing unit includes: performing downsampling on the second-chrominance processing unit by using a filter whose filtering coefficient is

$\begin{bmatrix} \frac{1}{8} & \frac{1}{4} & \frac{1}{8} \\ \frac{1}{8} & \frac{1}{4} & \frac{1}{8} \end{bmatrix}$ ; or performing downsampling on the second-chrominance processing unit by using a filter whose filtering

coefficient is $\begin{bmatrix} 1 & 0 \\ 0 & 0 \end{bmatrix}$ ; or performing downsampling on the second-chrominance processing unit by using a filter whose

filtering coefficient is $\begin{bmatrix} \frac{1}{2} & 0 \\ \frac{1}{2} & 0 \end{bmatrix}$ ; or performing downsampling on the second-chrominance processing unit by using a filter whose filtering coefficient is $\begin{bmatrix} \frac{1}{4} & \frac{1}{4} \\ \frac{1}{4} & \frac{1}{4} \end{bmatrix}$ .

A seventh aspect of the embodiments of the present invention provides a computer storage medium, configured to store a computer software instruction used to implement the method according to the fifth aspect or the sixth aspect, where the instruction includes a program used to perform the chrominance prediction method designed in the fifth aspect or the sixth aspect.

An eighth aspect of the embodiments of the present invention provides an apparatus, including a memory and a processor coupled to the memory, where the processor is configured to perform the chrominance prediction method designed in the fifth aspect or the sixth aspect.

It should be understood that technical solutions in the second to the eighth aspects of the embodiments of the present invention are consistent with those in the first aspect of the embodiments of the present invention, and beneficial effects thereof are similar. Details are not described again.

It can be learned from the foregoing technical solutions that the embodiments of the present invention provide the chrominance prediction method and apparatus. Based on a reconstructed luminance unit, an improved candidate chrominance prediction mode set is constructed, and a chrominance prediction mode is selected by performing encoding by using an appropriate mode, thereby improving encoding efficiency.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following descriptions show merely some embodiments of the present invention, and a person of ordinary skill in the art may derive other drawings from these accompanying drawings without creative efforts.

FIG. 1 is a schematic block diagram of a video coding system according to an embodiment of the present invention;
FIG. 2 is a schematic diagram of an apparatus for video coding according to an embodiment of the present invention;
FIG. 3 is a schematic block diagram of another video coding/decoding system according to an embodiment of the present invention;
FIG. 4 is a schematic block diagram of a video encoder according to an embodiment of the present invention;
FIG. 5 is a schematic block diagram of a video decoder according to an embodiment of the present invention;
FIG. 6 is a schematic diagram of 33 directional intra-frame prediction modes stipulated in the H.265 standard;
FIG. 7 is a schematic diagram of a location relationship between a reference pixel and a current to-be-predicted pixel in an intra-frame prediction process;
FIG. 8 is a schematic structural diagram of a planar prediction mode stipulated in the H.265 standard;
FIG. 9 is a schematic flowchart of a chrominance prediction method according to an embodiment of the present invention;
FIG. 10 is a schematic diagram of a relationship between a luminance component and a chrominance component of a video in a YUV 420 format;
FIG. 11 is a schematic diagram of a location relationship between a to-be-processed chrominance unit and a reconstructed chrominance unit in a neighborhood of the to-be-processed chrominance unit;
FIG. 12 is a schematic flowchart of another chrominance prediction method according to an embodiment of the present invention;
FIG. 13 is a schematic flowchart of another chrominance prediction method according to an embodiment of the present invention;
FIG. 14 is a schematic flowchart of another chrominance prediction method according to an embodiment of the present invention;
FIG. 15 is a schematic flowchart of another chrominance prediction method according to an embodiment of the present invention;
FIG. 16 is a schematic flowchart of another chrominance prediction method according to an embodiment of the present invention;
FIG. 17 is a schematic block diagram of a chrominance prediction apparatus according to an embodiment of the present invention; and
FIG. 18 is a schematic block diagram of another chrominance prediction apparatus according to an embodiment of the present invention.

## DESCRIPTION OF EMBODIMENTS

To make the objectives, technical solutions, and advantages of the present invention clearer, the following further describes the present invention in detail with reference to the accompanying drawings. Apparently, the described embodiments are merely some rather than all of the embodiments of the present invention.

In the specification, claims, and accompanying drawings of the present invention, the terms "first", "second", and the like are intended to distinguish between different objects, but do not indicate a particular order. In addition, the terms "including", "having", or any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, or the device.

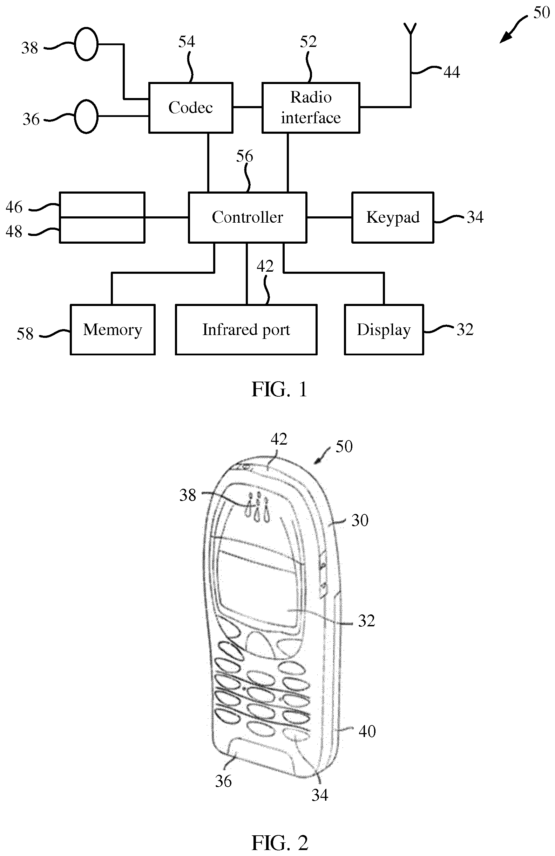

FIG. 1 is a schematic block diagram of a video coding/decoding apparatus or electronic device 50. The apparatus or electronic device may be incorporated into a codec in the embodiments of the present invention. FIG. 2 is a schematic diagram of an apparatus for video coding according to an embodiment of the present invention. Units in FIG. 1 and FIG. 2 are described below.

The electronic device 50 may be, for example, a mobile terminal or user equipment in a wireless communications system. It should be understood that the embodiments of the present invention may be implemented in any electronic device or apparatus that may need to encode and decode, or encode, or decode a video image.

The apparatus 50 may include a housing 30 for accommodating and protecting a device. The apparatus 50 may further include a display 32 that is in a form of a liquid crystal display. In other embodiments of the present invention, the display may be any appropriate display technology suitable for displaying an image or a video. The apparatus 50 may further include a keypad 34. In other embodiments of the present invention, any appropriate data or user interface mechanism may be used. For example, a user interface may be implemented as a virtual keyboard or data entry system as a part of a touch-sensitive display. The apparatus may include a microphone 36 or any appropriate audio input, and the audio input may be digital or analog signal input. The apparatus 50 may further include the following audio output device. In this embodiment of the present invention, the audio output device may be any one of the following: an earpiece 38, a speaker, or an analog audio output connection or a digital audio output connection. The apparatus 50 may further include a battery 40. In other embodiments of the present invention, the device may be powered by any appropriate mobile energy device, such as a solar cell, a fuel cell, or a clock generator. The apparatus may further include an infrared port 42 for short-range line of sight communication with other devices. In another embodiment, the apparatus 50 may further include any appropriate short-range communication solution, such as a Bluetooth wireless connection or a USB/firewire wired connection.

The apparatus 50 may include a controller 56 or a processor for controlling the apparatus 50. The controller 56 may be connected to a memory 58. In this embodiment of the present invention, the memory may store data in an image form and data in an audio form, and/or may further store an instruction to be executed on the controller 56. The controller 56 may also be connected to a codec circuit 54 suitable for implementing coding and decoding of audio and/or video data or assisting in coding and decoding implemented by the controller 56.

The apparatus 50 may further include a card reader 48 and a smart card 46, for example, a UICC and a UICC reader, used for providing user information and suitable for providing authentication information for authentication and authorization of a user on a network.

The apparatus 50 may further include a radio interface circuit 52. The radio interface circuit is connected to the controller and is suitable for generating a wireless communications signal, for example, for communication with a cellular communications network, a wireless communications system, or a wireless local area network. The apparatus 50 may further include an antenna 44. The antenna is connected to the radio interface circuit 52 for transmitting a radio frequency signal generated at the radio interface circuit 52 to another apparatus (other apparatuses) and receive a radio frequency signal from the another apparatus (other apparatuses).

In some embodiments of the present invention, the apparatus 50 includes a camera that is capable of recording or detecting individual frames, and the codec 54 or the controller receives and processes these single frames. In some embodiments of the present invention, the apparatus may receive to-be-processed video image data from another device prior to transmission and/or storage. In some embodiments of the present invention, the apparatus 50 may receive an image by using a wireless or wired connection for coding/decoding.

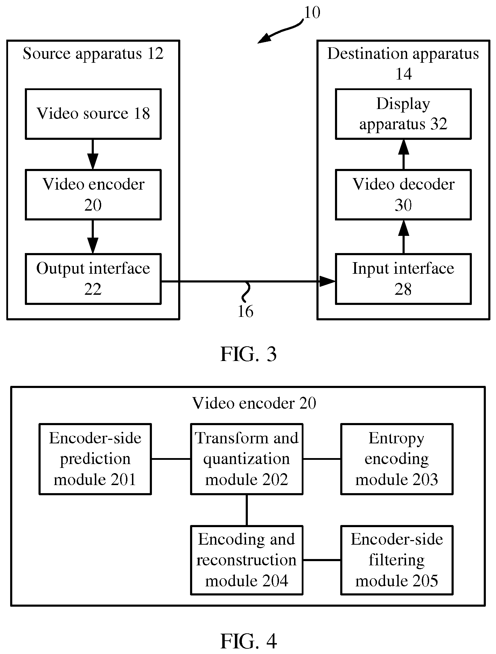

FIG. 3 is a schematic block diagram of another video coding/decoding system 10 according to an embodiment of the present invention. As shown in FIG. 3, the video coding/decoding system 10 includes a source apparatus 12 and a destination apparatus 14. The source apparatus 12 generates encoded video data. Therefore, the source apparatus 12 may be referred to as a video coding apparatus or a video coding device. The destination apparatus 14 may decode the encoded video data generated by the source apparatus 12. Therefore, the destination apparatus 14 may be referred to as a video decoding apparatus or a video decoding device. The source apparatus 12 and the destination apparatus 14 may be an instance of a video coding/decoding apparatus or a video coding/decoding device. The source apparatus 12 and the destination apparatus 14 may include a wide variety of apparatuses, including a desktop computer, a mobile computing apparatus, a notebook (for example, laptop) computer, a tablet computer, a set top box, a handset such as a smartphone, a television set, a camera, a display apparatus, a digital media player, a video game console, an in-vehicle computer, and the like.

The destination apparatus 14 may receive the encoded video data from the source apparatus 12 through a channel 16. The channel 16 may include one or more media and/or apparatuses capable of moving the encoded video data from the source apparatus 12 to the destination apparatus 14. In one instance, the channel 16 may include one or more communications media that enable the source apparatus 12 to directly transmit the encoded video data to the destination apparatus 14 in real time. In this instance, the source apparatus 12 may modulate the encoded video data according to a communications standard (for example, a wireless communications protocol), and may transmit the modulated video data to the destination apparatus 14. The one or more communications media may include wireless and/or wired communications media, such as a radio frequency (RF) spectrum or one or more physical transmission lines. The one or more communications media may form a part of a packet-based network (for example, a local area network, a wide area network, or a global network (for example, the Internet)). The one or more communications media may include a router, a switch, a base station, or another device that facilitates communication from the source apparatus 12 to the destination apparatus 14.

In another instance, the channel 16 may include a storage medium that stores the encoded video data generated by the source apparatus 12. In this instance, the destination apparatus 14 may access the storage medium through disk access or card access. The storage medium may include a variety of locally accessible data storage media, such as a Blu-ray disc, a DVD, a CD-ROM, a flash memory, or another suitable digital storage medium used for storing the encoded video data.

In another instance, the channel 16 may include a file server or another intermediate storage apparatus that stores the encoded video data generated by the source apparatus 12. In this instance, the destination apparatus 14 may access, through streaming transmission or downloading, the encoded video data stored on the file server or the another intermediate storage apparatus. The file server may be a type of server that can store the encoded video data and transmit the encoded video data to the destination apparatus 14. An instance file server includes a web server (for example, used for a website), a File Transfer Protocol (FTP) server, a network attached storage (NAS) apparatus, and a local disk drive.

The destination apparatus 14 may access the encoded video data by using a standard data connection (for example, an Internet connection). An instance type of the data connection includes a wireless channel (for example, a Wi-Fi connection) or a wired connection (for example, a DSL or a cable modem) that is suitable for accessing the encoded video data stored on the file server, or a combination of a wireless channel and a wired connection. Transmission of the encoded video data from the file server may be streaming transmission, downloading transmission, or a combination of streaming transmission and downloading transmission.

The technology of the present invention is not limited to a wireless application scenario. For example, the technology may be used to support video coding/decoding of a plurality of multimedia applications such as the following applications: over-the-air television broadcasting, cable television transmission, satellite television transmission, streaming video transmission (for example, through the Internet), encoding of video data stored on a data storage medium, decoding of video data stored on a data storage medium, or other applications. In some instances, the video coding/decoding system 10 may be configured to support unidirectional or bidirectional video transmission, to support applications such as streaming video transmission, video play, video broadcasting, and/or video telephony.

In the instance in FIG. 3, the source apparatus 12 includes a video source 18, a video encoder 20, and an output interface 22. In some instances, the output interface 22 may include a modulator/demodulator (modem) and/or a transmitter. The video source 18 may include a video capture apparatus (for example, a video camera), a video archive including previously captured video data, a video input interface that is configured to receive video data from a video content provider, and/or a computer graphics system that is configured to generate video data, or a combination of the foregoing video data sources.

The video encoder 20 may encode video data from the video source 18. In some instances, the source apparatus 12 directly transmits the encoded video data to the destination apparatus 14 through the output interface 22. The encoded video data may also be stored on the storage medium or the file server, so that the destination apparatus 14 can access the encoded video data subsequently for decoding and/or playing.

In the instance in FIG. 3, the destination apparatus 14 includes an input interface 28, a video decoder 30, and a display apparatus 32. In some instances, the input interface 28 includes a receiver and/or a modem. The input interface 28 may receive the encoded video data through the channel 16. The display apparatus 32 may be integrated with the destination apparatus 14 or may be located outside the destination apparatus 14. Generally, the display apparatus 32 displays decoded video data. The display apparatus 32 may include a variety of display apparatuses, such as a liquid crystal display (LCD), a plasma display, an organic light-emitting diode (OLED) display, or another type of display apparatus.

The video encoder 20 and the video decoder 30 may operate according to a video compression standard (for example, the High Efficiency Video Coding H.265 standard), and may comply with an HEVC test model (HM). Text descriptions ITU-T H.265 (V3) (04/2015) of the H.265 standard was released on April 29, 2015 and can be downloaded from https://handle.itu.int/11.1002/1000/12455.

Alternatively, the video encoder 20 and the video decoder 30 may be designed based on a JEM test model, and reference software for the JEM test model may be downloaded from https://jvet.hhi.fraunhofer.de/svn/svn_HMJEMSoftware.

Alternatively, the video encoder 20 and the video decoder 30 may operate according to other proprietary or industry standards. The standards include ITU-TH.261, ISO/IECMPEG-1 Visual, ITU-TH.262 or ISO/IECMPEG-2 Visual, ITU-TH.263, ISO/IECMPEG-4 Visual, ITU-TH.264 (also referred to as ISO/IECMPEG-4 AVC), and include Scalable Video Coding (SVC) and Multi-view Video Coding (MVC) extensions. It should be understood that the technology of the present invention is not limited to any specific coding/decoding standard or technology.

In addition, FIG. 3 is merely an instance and the technology of the present invention may be applied to a video coding/decoding application that does not necessarily include any data communication between an encoding apparatus and a decoding apparatus (for example, unilateral video coding or video decoding). In other instances, data is retrieved from a local memory, and the data is transmitted in a streaming manner by using a network, or the data is operated in a similar manner. The encoding apparatus may encode the data and store the data in a memory, and/or the decoding apparatus may retrieve the data from the memory and decode the data. In many instances, a plurality of apparatuses that do not communicate with each other and that only encode data in the memory and/or retrieve data from the memory and decode the data perform encoding and/or decoding.

Each of the video encoder 20 and the video decoder 30 may be implemented as any one of a plurality of appropriate circuits, for example, one or more microprocessors, DSP, ASIC, FPGA, discrete logic circuit, hardware, or any combination thereof. If the technology is partially or completely implemented by software, the apparatus may store an instruction of the software in an appropriate non-transitory computer readable storage medium, and may execute, by using one or more processors, an instruction in the hardware to execute the technology in the present invention. Any one of the foregoing items (including the hardware, the software, a combination of the hardware and the software, and the like) may be considered as one or more processors. Each of the video encoder 20 and the video decoder 30 may be included in one or more encoders or decoders, and either of the video encoder and the video decoder may be integrated as a part of a combined encoder/decoder (codec (CODEC)) in another apparatus.

The present invention may generally indicate that a video encoder 20 "signals" one piece of information to another apparatus (for example, a video decoder 30). The term "signals" may generally mean transfer of a syntax element and/or represent transfer of encoded video data. The transfer may occur in real time or approximately in real time. Alternatively, such communication may occur over a time span, for example, may occur during encoding when a syntax element is stored in a computer-readable storage medium by using binary data obtained through encoding. The syntax element can be retrieved by the decoding apparatus at any time after being stored in the medium.

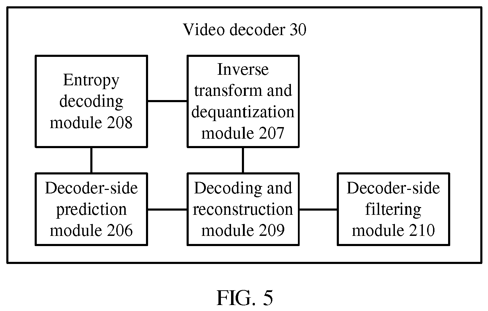

FIG. 4 is a schematic block diagram of a video encoder 20 according to an embodiment of the present invention, and the video encoder 20 includes an encoder-side prediction module 201, a transform and quantization module 202, an entropy encoding module 203, an encoding and reconstruction module 204, and an encoder-side filtering module 205. FIG. 5 is a schematic block diagram of a video decoder 30 according to an embodiment of the present invention, and the video decoder 30 includes a decoder-side prediction module 206, an inverse transform and dequantization module 207, an entropy decoding module 208, a decoding and reconstruction module 209, and a decoding and filtering module 210.

Each of the encoder-side prediction module 201 and the decoder-side prediction module 206 includes a prediction processing unit, and the prediction processing unit may segment a pixel block of a coding unit (CU) in one or more prediction units (PU) of the CU. The video encoder 20 and the video decoder 30 may support various PU sizes. It is assumed that a size of a specific CU is 2N×2N, the video encoder 20 and the video decoder 30 may support a PU size of 2N×2N or N×N for intra-frame prediction, and may further support symmetric PUs of 2N×N, N×2N or a similar size, and may further support asymmetric PUs of 2N×nU, 2N×nD, nL×2N, and nR×2N. This is not limited.

For intra-frame prediction, the prediction processing unit may generate predictive data of the PU by performing intra-frame prediction on the PU. The predictive data of the PU may include a predictive pixel block of the PU and various syntax elements. The prediction processing unit may perform intra-frame prediction on PUs in a strip I, a strip P, and a strip B.

To perform intra-frame prediction on the PU, the prediction processing unit may use a plurality of intra-frame prediction modes to generate a plurality of sets of predictive data of the PU. To generate the set of predictive data of the PU by using the intra-frame prediction mode, the prediction processing unit may extend sampling of sampling blocks from adjacent PUs across a sample block of the PU in a direction associated with the intra-frame prediction mode. It is assumed that an encoding order from left to right and from top to bottom is used for encoding the PU, the CU and a CTB. Adjacent PUs may be adjacent to the top, the upper right, the upper left, or the left of the PU. Prediction processing units may use different quantities of intra-frame prediction modes. In some instances, the quantity of intra-frame prediction modes may depend on a pixel block size of the PU.

In some instances, the prediction processing unit selects predictive data of the PU of the CU based on a code rate/distortion measure of the set of predictive data. For example, the prediction processing unit performs selection between an encoding mode and a parameter value of the encoding mode, such as an intra-frame prediction direction, by using a Lagrangian cost function. In this type of cost function, a weighting factor lambda is used to associate actual or estimated image distortion caused by a lossy encoding method with an actual or estimated information amount required to represent a pixel value in an image area: $C = D + \text{lambda} \times R$, where C is to-be-minimized Lagrangian costs, D is image distortion having a mode and a parameter of the mode, such as a mean square error, and R is a quantity of bits required to reconstruct an image block in a decoder, for example, includes a data amount used to represent an intra-frame prediction direction. Usually, an encoding mode with minimum costs is selected as an actual encoding mode.

The H.265 standard is used as an example below to describe an intra-frame prediction technology in detail. It should be understood that intra-frame prediction technologies in other video compression coding/decoding standards are based on a same technical principle, and can achieve similar technical effects. Details are not described again.

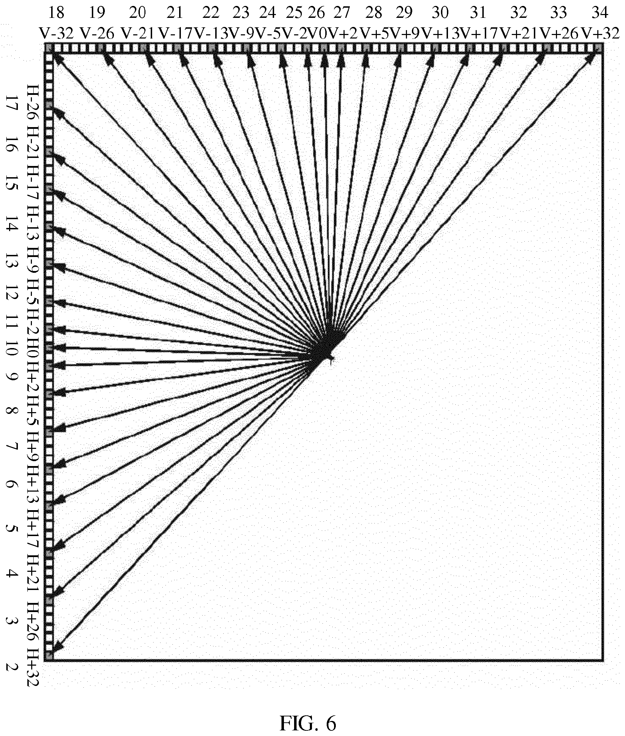

Intra-frame prediction is to predict a current block by using a reconstructed image of an encoded pixel block in a current frame. A total of 35 intra-frame prediction modes are defined in H.265, including a planar prediction mode, a DC prediction mode, and 33 directional intra-frame prediction modes, and the 35 intra-frame prediction modes are used for intra-frame prediction of a luminance component. Definitions of the 33 directions are shown in FIG. 6. Numbers 0 to 34 in the figure represent mode numbers, a letter H is used to represent a horizontal axis direction, a subsequent numeric part represents an offset value of a prediction direction relative to a horizontally leftward direction, a letter V is used to represent a vertical axis direction, and a subsequent numeric part represents an offset value of the prediction direction relative to a vertically upward direction. This offset value is denoted by d, and is measured in 1/32. In the horizontal axis direction, d has a positive value in downward offset, d has a negative value in upward offset, and a tangent value of an included angle between the prediction direction and the horizontally leftward direction is equal to d/32. In the vertical axis direction, d has a positive value in rightward offset, d has a negative value in leftward offset, and a tangent value of an included angle between the prediction direction and the vertically upward direction is equal to d/32. It can be seen from FIG. 6 that modes 2 to 17 are prediction modes in the horizontal axis direction, and modes 18 to 34 are prediction modes in the vertical axis direction. Compared with H.264, H.265 has finer division of angles of directional intra-frame prediction, so that directional texture information in an image can be better captured, and intra-frame prediction accuracy can be improved.

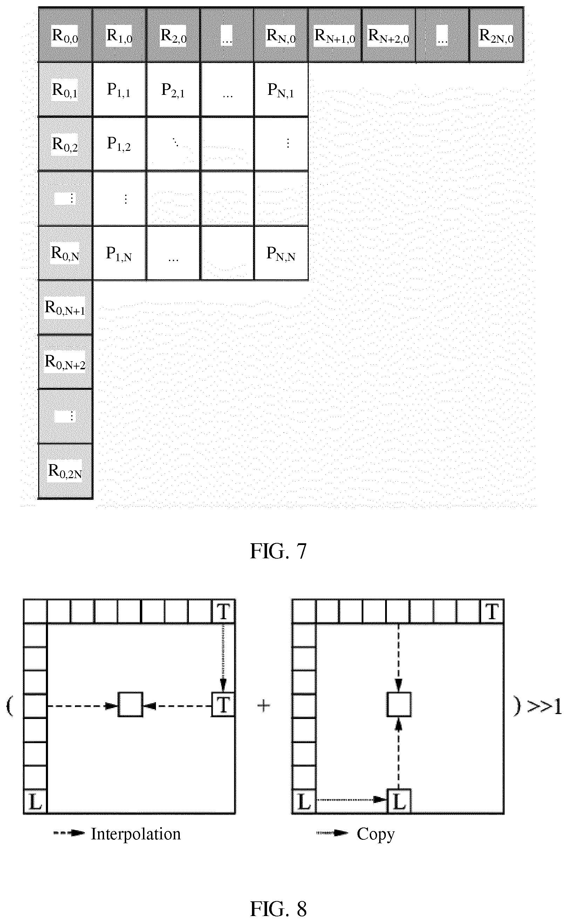

In H.265, pixels in a left column, pixels in an upper row, an upper-left pixel, a lower-left pixel, or an upper-right pixel of a current pixel block may be used as a reference pixel. As shown in FIG. 7, $P_{x,y}$ represents a predicted pixel of the current pixel block, and $R_{x,y}$ represents a reference pixel of the current pixel block. In some cases, some reference pixels may be not usable. For example, a reference pixel is located outside an image, or a prediction mode of a pixel block to which a reference pixel belongs is not an intra-frame prediction mode and cannot be used as a reference block for intra-frame prediction. In H.265, different processing methods are specified based on a case in which a reference pixel is not usable. For details, refer to specifications in the foregoing references.

The planar prediction mode and the direct current prediction mode in H.265 are also referred to as non-directional prediction modes in this specification. For the planar prediction mode, as shown in FIG. 8, pixels in a last row and a last column of a pixel block are copied from reference pixels at a lower-left corner and an upper-right corner, and a pixel in the middle is obtained by calculating an average value of values obtained by performing linear interpolation in the horizontal direction and the vertical direction. The direct current prediction mode and the directional prediction mode specified in H.265 are similar to those specified in H.264. In the direct current prediction mode, a value of a predicted pixel is an average value of peripheral reference pixels, and in the directional prediction mode, a predicted value is obtained based on a projection, on a reference pixel, of a current pixel in a specified direction.

For chrominance prediction, five chrominance prediction modes are specified in H.265: a planar prediction mode, a horizontal prediction mode, a vertical prediction mode, a direct current prediction mode, and a DM. The direct prediction mode indicates that a same prediction mode is used for chrominance prediction and luminance prediction of a corresponding pixel block. When a luminance prediction mode represented by the direct prediction mode is the same as any one of the first four modes, a luminance prediction mode whose index number is 34 is used as a candidate chrominance prediction mode, so that a total quantity of the candidate chrominance prediction modes is still 5.

In a process of forming the H.265 standard, there is further a LM. The LM prediction mode is a mode in which a reconstructed luminance pixel is used to continue to perform linear prediction on a chrominance pixel of a current pixel block, and in the LM prediction mode, a least square method is used to fit a linear relationship between a reconstructed pixel around a downsampled luminance component and a reconstructed pixel around a chrominance component. "WD3: Working Draft 3 of High-efficiency Video Coding" of JCTVC-E603 may be downloaded from http://phenix.int-evry.fr/jct/, and the LM prediction mode is described in detail.

After the H.265 standard is formulated, a video compression coding/decoding technology continues to develop. "Algorithm Description of Joint Exploration Test Model 4" of JVE-D1001 may be downloaded from https://phenix.int-evry.fr/jct/, and a related technology is described in detail.

Embodiments of the present invention provide a chrominance prediction method and apparatus. Based on a reconstructed luminance unit, an improved candidate chrominance prediction mode set is constructed, and a chrominance prediction mode is selected by performing encoding by using an appropriate mode, thereby improving encoding efficiency.

FIG. 9 is a schematic flowchart of a chrominance prediction method 1000 according to an embodiment of the present invention. The method includes but is not limited to the following steps.

In a feasible implementation, a chrominance pixel block on which chrominance prediction is currently to be performed may be referred to as a to-be-processed chrominance unit or a to-be-processed chrominance block. In some video compression coding/decoding technologies, division of a chrominance unit and division of a luminance unit are correlated. A chrominance unit and a corresponding luminance unit are used to encode a chrominance component and a luminance component of a same image area, and a size of the chrominance unit is less than a size of the corresponding luminance unit. For example, for a video sequence in a YUV 420 format, for an image area corresponding to a $4\times4$ pixel matrix, a luminance unit with a $4\times4$ pixel matrix, a U chrominance unit with a $2\times2$ pixel matrix, and a V chrominance unit with a $2\times2$ pixel matrix are used to encode a luminance component and chrominance components of the image area. It should be understood that one U chrominance unit or one V chrominance unit corresponds to one luminance unit. In some other video compression coding/decoding technologies, division of a chrominance unit and division of a luminance unit are not correlated. A chrominance unit and one or more corresponding luminance units are used to encode a chrominance component and a luminance component of a same image area, and a size of the chrominance unit is less than a size of the corresponding luminance unit. For example, for a video sequence in a YUV 420 format, for an image area corresponding to an $8\times8$ pixel matrix, one luminance unit with an $8\times8$ pixel matrix, or four luminance units with a $4\times4$ pixel matrix, or a U chrominance unit with a quarter of a $16\times16$ pixel matrix and one $4\times4$ pixel matrix and a V chrominance unit with one $4\times4$ pixel matrix are used to encode a luminance component and chrominance components of the image area. It should be understood that each of one U chrominance unit and one V chrominance unit corresponds to one or more luminance units. When a chrominance unit corresponds to some luminance units, it is also referred to as that the chrominance unit corresponds to one luminance unit. In a feasible implementation, the foregoing some or one or more luminance units that are used to encode a same image area together with one chrominance unit may be referred to as a luminance processing unit or a luminance processing block. Generally, when chrominance prediction is being performed, the luminance unit has been reconstructed, in other words, a reconstructed luminance unit or a reconstructed luminance block is generated. Therefore, it may be considered that one luminance processing unit corresponds to one or more reconstructed luminance units. It should be understood that the U chrominance unit and the V chrominance unit share a prediction mode for chrominance prediction, and perform intra-frame prediction processing including same steps. Therefore, unless otherwise specified, physical quantities such as a chrominance unit and a chrominance component in the following descriptions are a U chrominance unit or a V chrominance unit and a U chrominance component or a V chrominance component, or the like, and details are not described.

S1001. Perform downsampling on a luminance processing unit corresponding to a to-be-processed chrominance unit.

A downsampling process is also a process of low-pass filtering. Because details of a chrominance component are not as rich as details of a luminance component, low-pass filtering is performed on the luminance component, so that a property of the luminance component is closer to that of the chrominance component, and a subsequently obtained candidate luminance prediction mode is more suitable for chrominance prediction.

In a feasible implementation, after the downsampling, the luminance processing unit and the to-be-processed chrominance unit have a same size. For a video sequence in a YUV 420 format, downsampling may be performed by using a filter whose filtering coefficient is $\begin{bmatrix} \frac{1}{8} & \frac{1}{4} & \frac{1}{8} \\ \frac{1}{8} & \frac{1}{4} & \frac{1}{8} \end{bmatrix}$ . Specifically, FIG. 10 is a schematic diagram of a relationship between a luminance component and a chrominance component in the YUV 420 format. It should be understood that FIG. 10 is only a simplified representation of physical essence of an actual image, and represents only a correspondence between the luminance component and the chrominance component, and does not represent specific distribution locations of the luminance component and the chrominance component. As shown in FIG. 10, a dot represents a location of a luminance component of a pixel, a triangle represents a location of a chrominance component of a pixel, and a value of a luminance component at a location of any triangle may be interpolated by using values of luminance components represented by six dots around the triangle. It may be assumed that a to-be-interpolated luminance pixel value at the location of the triangle is y, values of luminance pixels represented by dots around the triangle are an upper-left dot $x_{11}$, an upper dot $x_{12}$, an upper-right dot $x_{13}$, a lower-left dot $x_{21}$, a lower dot $x_{22}$, and a lower-right dot $x_{23}$. $y = x_{11}/8 + x_{12}/4 + x_{13}/8 + x_{21}/8 + x_{22}/4 + x_{23}/8$ can be obtained by using the foregoing filter, and interpolation dots at locations of all triangles in the luminance processing unit constitute a downsampled luminance processing unit.

It should be understood that downsampling may be alternatively performed on the luminance processing unit by using a filter whose filtering coefficient is $\begin{bmatrix} 1 & 0 \\ 0 & 0 \end{bmatrix}$, $\begin{bmatrix} \frac{1}{2} & 0 \\ \frac{1}{2} & 0 \end{bmatrix}$ , or $\begin{bmatrix} \frac{1}{4} & \frac{1}{4} \\ \frac{1}{4} & \frac{1}{4} \end{bmatrix}$ , to obtain the downsampled luminance processing unit. Another form of filter used for a downsampling operation may be alternatively used. This is not limited.

A beneficial effect of this embodiment of the present invention is that different filters may be selected based on different complexity and performance requirements, and the different filters are suitable for different application scenarios.

It should be understood that step S1001 is an optional step. When step S1001 is performed, a subsequent luminance processing unit is a downsampled luminance processing unit, and when step S1001 is not performed, a subsequent luminance processing unit is a luminance processing unit on which downsampling is not performed.

S1002. Determine preset candidate luminance prediction modes.

The preset candidate luminance prediction modes include at least one of a prediction mode included in directional prediction modes and a prediction mode included in non-directional prediction modes. The directional prediction modes include a prediction mode that is at an angle of N degrees with a horizontal direction of a two-dimensional plane, N is a non-negative number less than 360, and the non-directional prediction modes include a direct current prediction mode and a planar prediction mode. In other words, one or more prediction modes are preset in the directional prediction modes and the non-directional prediction modes as the preset candidate luminance prediction modes. It should be understood that, typical embodiments of directional prediction and non-directional prediction are provided in the Background. However, descriptions of a prediction mode in this embodiment of the present invention are not limited to the Background. For directional prediction, a value range of N is wider. Non-directional prediction may further include various variant prediction manners of the direct current prediction mode and the planar prediction mode. This is not limited.

In a feasible implementation, the preset candidate luminance prediction modes include all directional prediction modes and all non-directional prediction modes in a candidate luminance prediction mode set, or the preset candidate luminance prediction modes include a subset including any combination of all directional prediction modes and all non-directional prediction modes in a candidate luminance prediction mode set. For embodiments to be in accordance with the protected invention the preset candidate luminance prediction modes include at least one directional prediction mode and at least one non-directional prediction mode.

In a feasible implementation, the preset candidate luminance prediction modes include luminance prediction modes of the one or more reconstructed luminance units corresponding to the luminance processing unit.

In a feasible implementation, the preset candidate luminance prediction modes include luminance prediction modes that are correlated to the luminance prediction modes of the one or more reconstructed luminance units. For example, when the luminance prediction mode is the directional prediction mode, the preset candidate luminance prediction modes include P prediction modes adjacent to the luminance prediction modes of the one or more reconstructed luminance units, where P is a positive number, or the preset candidate luminance prediction modes further include the non-directional prediction mode. When the luminance prediction mode is the non-directional prediction mode, the preset candidate luminance prediction modes include the preset directional prediction mode. Specifically, for example, when the luminance prediction mode is a horizontal prediction mode (a mode number is 10, as shown in FIG. 6), the preset candidate luminance prediction modes may include prediction modes whose mode numbers are 10, 8, 9, 11, and 12, or the preset candidate luminance prediction modes may include prediction mode whose mode numbers are 10, 8, 9, 11, and 12 and a direct current prediction mode; or when the luminance prediction mode is a direct current prediction mode, the preset candidate luminance prediction modes may include the direct current prediction mode, a horizontal prediction mode, and a vertical prediction mode.

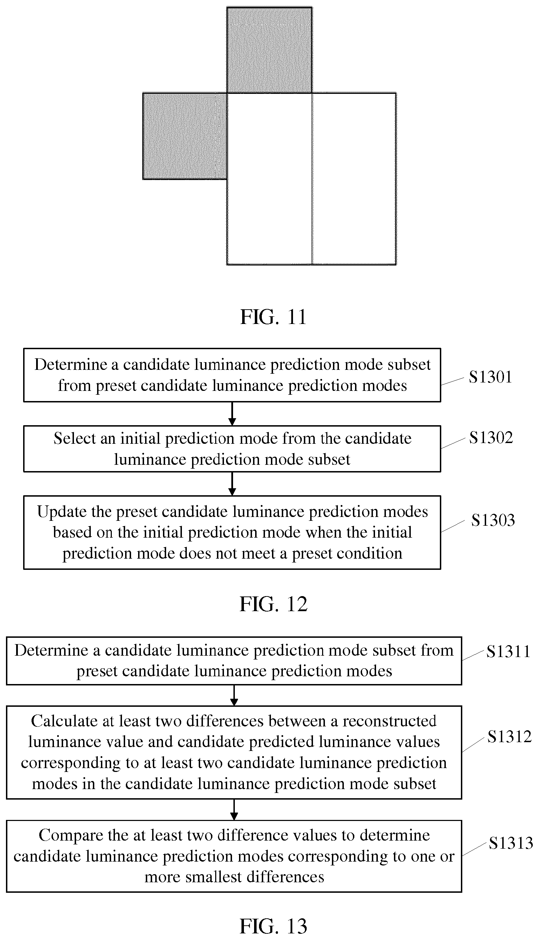

In a feasible implementation, the preset candidate luminance prediction modes include chrominance prediction modes of reconstructed chrominance units in a neighborhood of the to-be-processed chrominance unit, for example, chrominance prediction modes of reconstructed chrominance units that are adjacent to the top, the left, the upper left, the upper right, and the lower left of the to-be-processed chrominance unit. Specifically, for example, as shown in FIG. 11, chrominance prediction modes of reconstructed chrominance units adjacent to the top and left of the to-be-processed chrominance unit may be selected as the preset candidate luminance prediction modes.

It should be understood that the foregoing implementations of the preset candidate luminance prediction modes may be performed independently, or may be performed in combination. This is not limited.

A beneficial effect of this embodiment of the present invention is that prediction modes with relatively strong correlation are selected as the candidate luminance prediction modes to participate in searches, thereby improving search efficiency and increasing a search speed.

It should be understood that step S1002 is a process of presetting candidate luminance prediction modes. In some feasible implementations, the preset candidate luminance prediction modes have been built in an encoder and a decoder. Therefore, in embodiments outside of the scope of the protected invention, step S1002 is an optional step. Step S1002 may be performed before step S1001, or may be performed after step S1001. This is not limited.

S1003. Determine one or more target luminance prediction modes of the luminance processing unit from the preset candidate luminance prediction modes.

In a feasible implementation, before a chrominance unit is predicted, steps of prediction and reconstruction have been completed for a corresponding luminance processing unit. Therefore, a luminance prediction mode for actual encoding of one or more reconstructed luminance units corresponding to the luminance processing unit and a corresponding reconstructed luminance value have been determined. The luminance processing unit is used as an independent prediction unit to construct a candidate predicted luminance value based on the candidate luminance prediction mode, and any candidate predicted luminance value corresponds to one candidate luminance prediction mode.

In a feasible implementation, step S1003 is specifically: iteratively determining an initial prediction mode from the preset candidate luminance prediction modes until the initial prediction mode meets a preset condition.

One or more candidate predicted luminance values generated based on one or more initial prediction modes that are generated through iteration and that meet the preset condition are one or more candidate predicted luminance values of the luminance processing unit that are determined in this step and that have a smallest difference from a reconstructed luminance value of the luminance processing unit, that is, candidate predicted luminance values corresponding to the one or more target luminance prediction modes.

It should be understood that for the one or more candidate predicted luminance values of the luminance processing unit that have the smallest difference from the reconstructed luminance value of the luminance processing unit, a difference between a predicted luminance value, of the luminance processing unit, corresponding to any target luminance prediction mode and the reconstructed luminance value of the luminance processing unit is less than or equal to a difference between a predicted luminance value, of the luminance processing unit, corresponding to each candidate luminance prediction mode that is not determined as the target luminance prediction mode and the reconstructed luminance value of the luminance processing unit.

A beneficial effect of this embodiment of the present invention is as follows: Through iterative searches, an operation amount required for finding an optimal prediction mode is reduced, processing efficiency is improved, and a processing time is reduced.

In a feasible implementation, as shown in FIG. 12, the iteratively determining an initial prediction mode includes the following steps.

S1301. Determine a candidate luminance prediction mode subset from the preset candidate luminance prediction modes.

In a feasible implementation, step S1301 is specifically: determining that the candidate luminance prediction mode subset is the same as the preset candidate luminance prediction modes, in other words, using all the preset candidate luminance prediction modes as the candidate luminance prediction mode subset.

In a feasible implementation, step S1301 is specifically: determining that the candidate luminance prediction mode subset includes prediction modes selected from the directional prediction modes at a preset angle interval, in other words, extracting, at the preset angle interval, prediction modes corresponding to a plurality of prediction directions from prediction directions to form the candidate luminance prediction mode subset. For example, when there are 32 directional prediction modes, one prediction mode may be selected at an interval of three prediction modes based on prediction directions represented by the 32 directional prediction modes, to be specific, the preset angle interval is an angle interval including three prediction modes, to form the candidate luminance prediction mode subset. It should be understood that the foregoing embodiment is merely an example for description, and a quantity of directional prediction modes and the preset angle interval are not limited.

In a feasible implementation, step S1301 is specifically: determining that the candidate luminance prediction mode subset includes prediction modes selected from the directional prediction modes at a preset angle interval and the non-directional prediction mode. In other words, in this embodiment, in addition to the selected directional prediction mode similar to that in the previous embodiment, the candidate luminance prediction mode subset further includes the non-directional prediction mode, for example, at least one of the direct current prediction mode and the planar prediction mode. The prediction modes selected from the directional prediction mode at the preset angle interval and the non-directional prediction mode jointly form the candidate luminance prediction mode subset.

S 1302. Select an initial prediction mode from the candidate luminance prediction mode subset.

In a feasible implementation, step S1302 may include the following steps.

S 1321. Calculate at least two differences between a reconstructed luminance value and candidate predicted luminance values corresponding to at least two candidate luminance prediction modes in the candidate luminance prediction mode subset.

It should be understood that, in a specific implementation, the prediction unit and the reconstructed unit usually participate in calculation in a form of a pixel matrix. Therefore, it may be assumed that the candidate predicted luminance value is a candidate predicted luminance value matrix, and the reconstructed luminance value is a reconstructed luminance value matrix. This step is specifically: calculating a difference between an element at a corresponding location in each of at least two candidate predicted luminance value matrices and an element at a corresponding location in the reconstructed luminance value matrix, to obtain difference matrices; and determining the differences based on the difference matrices.

It should be understood that, when there is one candidate luminance prediction mode in the candidate luminance prediction mode subset, this calculation step and a subsequent comparison step are not required, and the candidate luminance prediction mode is the initial prediction mode.

Specifically, it may be assumed that a candidate predicted luminance value matrix Pred is

$$\begin{bmatrix} a_{11} & a_{12} & a_{13} & a_{14} \\ a_{21} & a_{22} & a_{23} & a_{24} \\ a_{31} & a_{32} & a_{33} & a_{34} \\ a_{41} & a_{42} & a_{43} & a_{44} \end{bmatrix}$$ , and that a reconstructed luminance value matrix Recon is $$\begin{bmatrix} b_{11} & b_{12} & b_{13} & b_{14} \\ b_{21} & b_{22} & b_{23} & b_{24} \\ b_{31} & b_{32} & b_{33} & b_{34} \\ b_{41} & b_{42} & b_{43} & b_{44} \end{bmatrix}$$ . In this

case, a difference matrix Res is $$\begin{bmatrix} a_{11}-b_{11} & a_{12}-b_{12} & a_{13}-b_{13} & a_{14}-b_{14} \\ a_{21}-b_{21} & a_{22}-b_{22} & a_{23}-b_{23} & a_{24}-b_{24} \\ a_{31}-b_{31} & a_{32}-b_{32} & a_{33}-b_{33} & a_{34}-b_{34} \\ a_{41}-b_{41} & a_{42}-b_{42} & a_{43}-b_{43} & a_{44}-b_{44} \end{bmatrix}$$ .

In a feasible implementation, absolute values of all elements in the difference matrix are accumulated as the difference. For example, the difference may be calculated as $Dis = \sum_{i,j} \left| a_{i,j} - b_{i,j} \right|$ .

In a feasible implementation, the difference matrix is transformed to obtain a transformed difference matrix, and absolute values of all elements in the transformed difference matrix are accumulated as the difference. For example, it may be assumed that a transform operation is T, a transformed difference matrix

$Tran = T(Dis) = $ $$\begin{bmatrix} c_{11} & c_{12} & c_{13} & c_{14} \\ c_{21} & c_{22} & c_{23} & c_{24} \\ c_{31} & c_{32} & c_{33} & c_{34} \\ c_{41} & c_{42} & c_{43} & c_{44} \end{bmatrix}$$ , and the difference may be calculated as $Dis = \sum_{i,j} \left| c_{i,j} \right|$ .

In a feasible implementation, the difference matrix is sequentially transformed, quantized, dequantized, and inversely transformed to obtain a reconstructed difference matrix, and absolute values of all elements in the reconstructed difference matrix are accumulated as the difference.

A beneficial effect of this embodiment of the present invention is that different calculation manners may be selected based on different complexity and performance requirements, and the different calculation manners are suitable for different application scenarios.

The transform in the foregoing plurality of embodiments may be of a plurality of different types, such as Hadamard transform, Haar transform, DCT, and DST. This is not limited. Correspondingly, the inverse transform in the embodiments includes inverse Hadamard transform corresponding to the Hadamard transform, inverse Haar transform corresponding to the Haar transform, inverse discrete cosine transform corresponding to the discrete cosine transform, or inverse discrete sine transform corresponding to the discrete sine transform. Specifically, for example, when the Hadamard transform is used to complete the transform operation, it may be assumed that a transform base matrix of the Hadamard

transform is $$\begin{bmatrix} 1 & 1 & 1 & 1 \\ 1 & -1 & 1 & -1 \\ 1 & 1 & -1 & -1 \\ 1 & -1 & -1 & 1 \end{bmatrix}$$ . In this case, $Tran = $ $$\begin{bmatrix} 1 & 1 & 1 & 1 \\ 1 & -1 & 1 & -1 \\ 1 & 1 & -1 & -1 \\ 1 & -1 & -1 & 1 \end{bmatrix}$$ $\times$

$$\begin{bmatrix} a_{11}-b_{11} & a_{12}-b_{12} & a_{13}-b_{13} & a_{14}-b_{14} \\ a_{21}-b_{21} & a_{22}-b_{22} & a_{23}-b_{23} & a_{24}-b_{24} \\ a_{31}-b_{31} & a_{32}-b_{32} & a_{33}-b_{33} & a_{34}-b_{34} \\ a_{41}-b_{41} & a_{42}-b_{42} & a_{43}-b_{43} & a_{44}-b_{44} \end{bmatrix} \times \begin{bmatrix} 1 & 1 & 1 & 1 \\ 1 & -1 & 1 & -1 \\ 1 & 1 & -1 & -1 \\ 1 & -1 & -1 & 1 \end{bmatrix}$$ .

A beneficial effect of this embodiment of the present invention is that different transform manners may be selected based on different complexity and performance requirements, and the different transform manners are suitable for different application scenarios.

S1322. Compare the at least two differences to determine that the initial prediction mode includes candidate luminance prediction modes corresponding to one or more smallest differences.

Specifically, the at least two differences obtained in step S1321 are compared. In a feasible implementation, a candidate luminance prediction mode corresponding to the smallest difference may be selected as the initial prediction mode. In a feasible implementation, a plurality of smallest differences, that is, a preset quantity of differences that are smaller than other differences in difference comparison, may be selected as initial selection prediction modes. To be specific, a difference between a predicted luminance value, of the luminance processing unit, corresponding to any initial prediction mode and the reconstructed luminance value of the luminance processing unit is less than or equal to a difference between a predicted luminance value, of the luminance processing unit, corresponding to each candidate luminance prediction mode that is in the candidate luminance prediction mode subset and that is not determined as the initial prediction mode and the reconstructed luminance value of the luminance processing unit.

S1303. Update the preset candidate luminance prediction modes based on the initial prediction mode when the initial prediction mode does not meet a preset condition.

Step S1303 is a condition for determining whether to perform a next iteration. To be specific, it is determined whether the initial prediction mode meets the preset condition.

In a feasible implementation, the preset condition includes: the initial prediction mode is the non-directional prediction mode, to be specific, when the initial prediction mode is the non-directional prediction mode, iteration is terminated.

In a feasible implementation, the preset condition includes: each prediction mode that has a preset angle difference from the initial prediction mode exists in any candidate luminance prediction mode subset in the iteration, to be specific, when each prediction mode that has the preset angle difference from the initial prediction mode has been used for difference comparison in each iteration, iteration is terminated.

In a feasible implementation, the preset condition includes: a quantity of iteration times of the initial prediction mode reaches a preset quantity of times.

In a feasible implementation, the preset condition includes: a difference corresponding to the initial prediction mode is less than a preset threshold.

It should be understood that the foregoing embodiments of a plurality of preset conditions may be considered separately, or may be considered comprehensively in an "and" or "or" relationship. This is not limited.

A beneficial effect of this embodiment of the present invention is that different iteration termination conditions may be selected based on different complexity and performance requirements, and the different iteration termination conditions are suitable for different application scenarios.

In addition, when it is determined to enter a next iteration, in step S1303, the preset candidate luminance prediction modes are updated based on the initial prediction mode.

It should be understood that a process of the foregoing iterative calculation may be alternatively described as follows: determining a candidate luminance prediction mode subset from the preset candidate luminance prediction modes; selecting an initial prediction mode from the candidate luminance prediction mode subset; and when the initial prediction mode does not meet a preset condition, updating the preset candidate luminance prediction modes based on the initial prediction mode, redetermining the candidate luminance prediction mode subset from the updated preset candidate luminance prediction modes, and reselecting the initial prediction mode from the redetermined candidate luminance prediction mode subset, until the reselected initial prediction mode meets the preset condition; or when the initial prediction mode meets a preset condition, using the initial prediction mode as the target luminance prediction mode. The preset condition includes: the initial prediction mode is the non-directional prediction mode; or each prediction mode that has a preset angle difference from the initial prediction mode exists in the candidate luminance prediction mode subset that is determined from the preset candidate luminance prediction modes or that is redetermined from the updated preset candidate luminance prediction modes; or a quantity of reselection times of the initial prediction mode reaches a preset quantity of times; or a difference corresponding to the initial prediction mode is less than a preset threshold.

In a feasible implementation, the updated preset candidate luminance prediction modes include an initial selection prediction mode selected in a previous iteration and prediction modes that have a preset angle difference from the initial prediction mode. In a feasible implementation, the prediction modes that have the preset angle difference from the initial prediction mode include: M prediction modes that are adjacent to the initial prediction mode, where M is a positive number. Specifically, when the initial prediction mode is the horizontal prediction mode (the mode number is 10, as shown in FIG. 6), prediction modes whose mode numbers are 8, 9, 11, and 12 and the horizontal prediction mode may be selected to form the updated preset candidate luminance prediction modes.

It should be understood that, in the previous iteration, a difference corresponding to the initial prediction mode has been obtained. Therefore, when a difference calculation manner remains unchanged, in a current iteration, the difference corresponding to the initial prediction mode may be not calculated again, and the difference corresponding to the initial prediction mode is recorded after the previous iteration and is used for comparison with a difference corresponding to another prediction mode that has the preset angle difference from the initial prediction mode in the current iteration.

After the preset candidate luminance prediction modes are updated, step S1301 is performed to enter the next iteration.

It should be understood that, for step S1003, in a feasible implementation, iteration is performed once. As shown in FIG. 13, specific steps are as follows:

S1311. Determine a candidate luminance prediction mode subset from the preset candidate luminance prediction modes.

S1312. Calculate at least two differences between a reconstructed luminance value and candidate predicted luminance values corresponding to at least two candidate luminance prediction modes in the candidate luminance prediction mode subset.

S1313. Compare the at least two differences to determine candidate luminance prediction modes corresponding to one or more smallest differences.

For a specific implementation, refer to related steps in the foregoing embodiment. Details are not described again.

S 1004. Use the target luminance prediction mode as a candidate chrominance prediction mode, to obtain a predicted chrominance value of the to-be-processed chrominance unit.

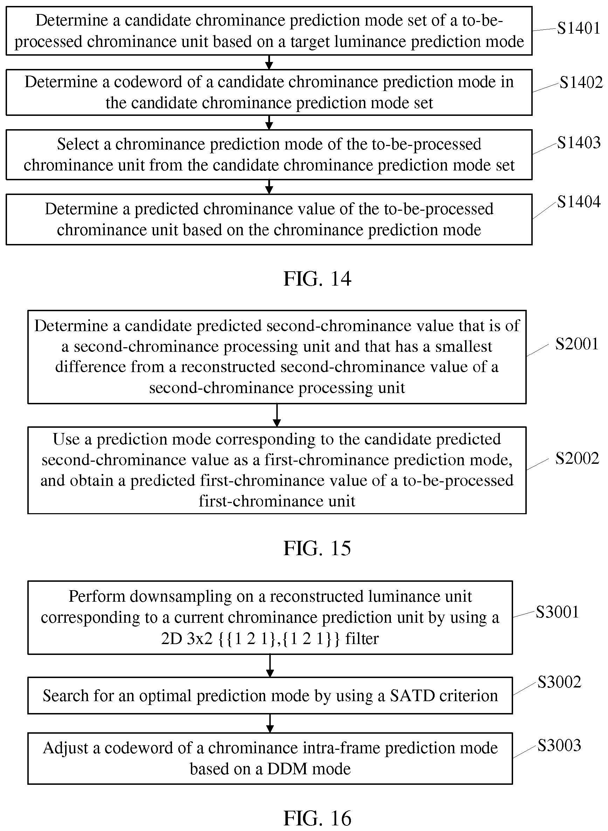

In a feasible implementation, as shown in FIG. 14, step S1004 specifically includes the following steps.

S 1401. Determine a candidate chrominance prediction mode set of the to-be-processed chrominance unit based on the target luminance prediction mode.

In a feasible implementation, it is determined that the candidate chrominance prediction mode set includes only the target luminance prediction mode. It should be understood that, in a feasible implementation, when there is only one target luminance prediction mode, the target luminance prediction mode is the chrominance prediction mode of the to-be-processed chrominance unit, and no subsequent step needs to be performed.

A beneficial effect of this embodiment of the present invention is that the candidate chrominance prediction mode includes only the target luminance prediction mode, thereby reducing a code rate of an encoding mode.

In a feasible implementation, it is determined that the candidate chrominance prediction mode set includes the target luminance prediction mode and one or more preset candidate chrominance prediction modes. In a feasible implementation, the preset candidate chrominance prediction modes include at least one of a horizontal prediction mode, a vertical prediction mode, a direct current prediction mode, a planar prediction mode, and a DM. In a feasible implementation, the preset candidate chrominance prediction modes further include a directional prediction mode in a non-horizontal direction or a non-vertical direction, or a LM. Specifically, for example, it may be assumed that the target luminance prediction mode is the horizontal prediction mode, and the candidate chrominance prediction mode set includes the target luminance prediction mode (the horizontal prediction mode), the vertical prediction mode, the planar prediction mode, and the direct prediction mode (a prediction mode whose mode number is 8, as shown in FIG. 6). In a feasible implementation, a quantity of the candidate chrominance prediction modes in the candidate chrominance prediction mode set is preset and fixed. When a candidate chrominance prediction mode set including the target luminance prediction mode and a first preset candidate chrominance prediction mode has duplicate chrominance prediction modes, a second preset candidate chrominance prediction mode is added to the candidate chrominance prediction mode set, so that the quantity of the candidate chrominance prediction modes in the candidate chrominance prediction mode set remains unchanged. Specifically, for example, it may be assumed that there are four candidate chrominance prediction modes, the target luminance prediction mode corresponds to the horizontal prediction mode, the first preset candidate chrominance prediction mode includes the horizontal prediction mode, the vertical prediction mode, and the planar prediction mode, and the second preset candidate chrominance prediction mode includes a prediction mode (as shown in FIG. 6) whose mode number is 34. In this case, the candidate chrominance prediction mode set includes the target luminance prediction mode (the horizontal prediction mode), the vertical prediction mode, the planar prediction mode, and the prediction mode whose mode number is 34.

A beneficial effect of this embodiment of the present invention is that another preset prediction mode is added to the candidate chrominance prediction modes, thereby avoiding impact exerted on encoding performance when the target luminance prediction mode is misjudged.

S1402. Determine a codeword of the candidate chrominance prediction mode in the candidate chrominance prediction mode set.

In different chrominance prediction schemes, mode information of a current prediction unit is binarized by using different encoding manners, and entropy encoding is then performed on a binary figure obtained through binarization by using a CABAC (context-adaptive binary arithmetic coding) technology. For example, in a chrominance prediction solution specified in the H.265 standard, a binarization solution shown in Table 1 is used.

**Table 1: Binary representation of a chrominance prediction mode**

| Index of a chrominance prediction mode | Binary representation |
|---|---|
| 4 | 0 |
| 0 | 100 |
| 1 | 101 |
| 2 | 110 |
| 3 | 111 |

In a feasible implementation, the codeword of the candidate chrominance prediction mode in the candidate chrominance prediction mode set is determined by using a variable-length code. A rule of determining the codeword is that when probabilities that the candidate chrominance prediction modes are selected are close, higher efficiency is achieved if encoding is performed by using a fixed-length code; and when the probabilities that the candidate chrominance prediction modes are selected have a relatively large difference, higher efficiency is achieved if encoding is performed by using the variable-length code, and a chrominance mode that is more likely to be selected needs to be represented by a shorter codeword.

It may be assumed that one of the target luminance prediction modes that is corresponding to the candidate predicted luminance value that is of the luminance processing unit and that has a smallest difference from the reconstructed luminance value of the luminance processing unit is the first target luminance prediction mode, and specially, when there is one target luminance prediction mode, the target luminance prediction mode is the first target luminance prediction mode.

In a feasible implementation, if the candidate chrominance prediction mode set includes at least the first target luminance prediction mode, the linear prediction mode, and the direct prediction mode, codewords are respectively assigned to the first target luminance prediction mode, the linear prediction mode, and the direct prediction mode in ascending order of length. Specially, a shortest codeword for the candidate chrominance prediction mode in the candidate chrominance prediction mode set may be assigned to the first target luminance prediction mode.

In a feasible implementation, if the candidate chrominance prediction mode set includes at least the first target luminance prediction mode, the linear prediction mode, and the direct prediction mode, codewords are respectively assigned to the linear prediction mode, the first target luminance prediction mode, and the direct prediction mode in ascending order of length. Specially, a shortest codeword for the candidate chrominance prediction mode in the candidate chrominance prediction mode set may be assigned to the linear prediction mode.

In a feasible implementation, if the candidate chrominance prediction mode set includes at least the first target luminance prediction mode and the direct prediction mode, codewords are respectively assigned to the first target luminance prediction mode and the direct prediction mode in ascending order of length. Specially, a shortest codeword for the candidate chrominance prediction mode in the candidate chrominance prediction mode set may be assigned to the first target luminance prediction mode.

In a feasible implementation, when a quantity of the candidate chrominance prediction modes in the candidate chrominance prediction mode set changes, a length of the variable-length code changes accordingly, for example, one or more bits are added or removed. For example, when the first target luminance prediction mode is added to a candidate chrominance prediction mode set in an H.265 chrominance prediction solution, a binary representation solution shown in Table 2 is used, and it can be seen that each of binary representations corresponding to indexes 0 to 4 is increased by one bit.

**Table 2: Binary representation of a chrominance prediction mode**

| Index of a chrominance prediction mode | Binary representation |
|---|---|
| 5 (first target luminance prediction mode) | 0 |
| 4 | 10 |
| 0 | 1100 |
| 1 | 1101 |
| 2 | 1110 |
| 3 | 1111 |

It should be understood that step S1402 is a process of determining the codeword of the candidate chrominance prediction mode. In some feasible implementations, the codeword of the candidate chrominance prediction mode has been built in the encoder and the decoder. Therefore, step S1402 is an optional step. In some feasible implementations, when it is determined that there is only one candidate chrominance prediction mode, it is specified only in a codec side protocol that when the first target luminance prediction mode is used as a chrominance prediction mode, the chrominance prediction mode does not need to be encoded or decoded. Therefore, this step is not required either.

A beneficial effect of this embodiment of the present invention is that the codeword of the candidate chrominance prediction mode is adjusted based on a probability that each candidate chrominance prediction mode in the candidate chrominance prediction mode set is selected, so that encoding performance can be further improved.

S1403. Select a chrominance prediction mode of the to-be-processed chrominance unit from the candidate chrominance prediction mode set.

In a feasible implementation, the method is used to encode the to-be-processed chrominance unit, and step S1403 is specifically: traversing candidate chrominance prediction modes in the candidate chrominance prediction mode set to obtain corresponding candidate predicted chrominance values; calculating encoding costs of each candidate chrominance prediction mode based on an original value of the to-be-processed chrominance unit and the candidate predicted chrominance values obtained through the traversing; determining a candidate chrominance prediction mode with smallest encoding costs as the chrominance prediction mode of the to-be-processed chrominance unit; and encoding an index of the chrominance prediction mode in the candidate chrominance prediction mode set. Specifically, it may be assumed that the candidate chrominance prediction mode set includes a prediction mode PredM 1 and a prediction mode PredM 2. Predicted values Pred 1 and Pred 2 corresponding to the prediction modes are obtained. Then, distortion values Dis 1 = SumAbs (Pred 1 - Org) and Dis 2 = SumAbs (Pred 2 - Org) are respectively calculated, where Org is the original value of the to-be-processed chrominance unit, and SumAbs() represents calculation of an absolute sum. The distortion values are compared to obtain code rates for encoding the distortion values. For example, the distortion values may be encoded, a code rate Rate 1 = T(Dis 1), a code rate Rate 2 = T(Dis 2), and T() represents an encoding process. Encoding costs Cost 1 = f(Dis 1, Rate 1) and Cost 2 = f(Dis 2, Rate 2) are calculated based on at least one of the code rate and the distortion, where f() represents calculation of the encoding costs. A prediction mode corresponding to smallest encoding costs is used as the chrominance prediction mode, to be specific, when Cost 1 < Cost 2, PredM 1 is selected as the chrominance prediction mode, and a mode index of PredM 1 is encoded into a bitstream.

In a feasible implementation, the selected chrominance prediction mode is encoded based on the codeword determined in the foregoing step.

In a feasible implementation, the method is used to decode the to-be-processed chrominance unit, and step S1403 is specifically: decoding an index of the chrominance prediction mode in the candidate chrominance prediction mode set from a bitstream; and determining the chrominance prediction mode from the candidate chrominance prediction mode set based on the index, to obtain a corresponding predicted chrominance value.

In a feasible implementation, the selected chrominance prediction mode is decoded based on the codeword determined in the foregoing step.

S1404. Determine a predicted chrominance value of the to-be-processed chrominance unit based on the chrominance prediction mode.

According to the chrominance prediction method provided in this embodiment of the present invention, based on a reconstructed luminance unit, an improved candidate chrominance prediction mode set is constructed, and a chrominance prediction mode is selected by performing encoding by using an appropriate mode, thereby improving encoding efficiency.

FIG. 15 is a schematic flowchart of another chrominance prediction method 2000 according to an embodiment of the present invention. The method includes but is not limited to the following steps.

As described above, for video images in some formats, chrominance components may be further classified into a first-chrominance component and a second-chrominance component. For example, for a video image in a YUV 420 format, chrominance components may be further classified into a U component and a V component. In the embodiment shown in FIG. 9, chrominance components are processed together, in other words, the first-chrominance component and the second-chrominance component have a same chrominance prediction mode. The chrominance prediction mode of both the first-chrominance component and the second-chrominance component can be obtained by performing chrominance prediction only on the first-chrominance component by using the method in the embodiment in FIG. 9.

In a feasible implementation, a first-chrominance component and a second-chrominance component of a same chrominance processing unit may have different prediction modes.

S2001. Determine a candidate predicted second-chrominance value that is of a second-chrominance processing unit and that has a smallest difference from a reconstructed second-chrominance value of a second-chrominance processing unit.

The second-chrominance processing unit corresponds to one or more reconstructed second-chrominance units. Because human eyes are equally sensitive to the first-chrominance component and the second-chrominance component, generally, the second-chrominance processing unit includes only one reconstructed second-chrominance unit, and corresponds to one first-chrominance unit.

This step has a technical means similar to that of determining one or more target luminance prediction modes of the luminance processing unit from the preset candidate luminance prediction modes in step S1003. Reference may be made to step S1003 and various related feasible implementations. Details are not described again.

S2002. Use a prediction mode corresponding to the candidate predicted second-chrominance value as a first-chrominance prediction mode, and obtain a predicted first-chrominance value of a to-be-processed first-chrominance unit.

This step has a technical means similar to that of obtaining, when there is one target luminance prediction mode, a predicted chrominance value of the to-be-processed chrominance unit based on the target luminance prediction mode in step S1004. Reference may be made to step S1004 and various related feasible implementations. Details are not described again.

Specifically, for example, it may be assumed that, for a chrominance unit in the YUV 420 format, a U component of the chrominance unit has been reconstructed based on a horizontal prediction mode. It may be assumed that candidate chrominance prediction modes include the horizontal prediction mode, a vertical prediction mode, a planar prediction mode, a direct prediction mode, a direct current prediction mode, and a linear prediction mode, and a luminance prediction mode corresponding to the direct prediction mode is different from other candidate chrominance prediction modes. In this case, six predicted values of the U component of the chrominance unit are still constructed based on the six candidate chrominance prediction modes; encoding costs corresponding to each candidate chrominance prediction modes are calculated based on a reconstructed value of the U component and the predicted values of the U component, for example, Hadamard transform is performed on differences between the reconstructed value of the U component and the predicted values, and energy of a transform coefficient is calculated as the encoding costs; a candidate chrominance prediction mode corresponding to smallest encoding costs is selected as a chrominance prediction mode of a V component; and a predicted value of the V component is obtained based on the chrominance prediction mode.

According to the chrominance prediction method provided in this embodiment of the present invention, based on a reconstructed first-chrominance unit, an improved candidate chrominance prediction mode is constructed and used as a prediction mode of second-chrominance prediction, thereby improving encoding efficiency.

It should be understood that, on a decoder side, the implementations shown in FIG. 9 and FIG. 15 may be performed before a luminance unit is reconstructed or may be performed after a luminance unit is reconstructed. This is not limited.

FIG. 16 is a schematic flowchart of still another chrominance prediction method 3000 according to an embodiment of the present invention. The method includes but is not limited to the following steps.

In a chrominance intra-frame prediction mode solution described in JVET-D1001, candidate chrominance intra-frame prediction modes include a direct prediction mode, a linear prediction mode, and four conventional modes (a planar prediction mode, a vertical prediction mode, a horizontal prediction mode, and a direct current prediction mode). When a luminance prediction mode represented by any one of the four conventional modes is the same as a luminance prediction mode represented by the direct prediction mode, a vertical/diagonal prediction mode (a mode number is 66) is used instead. For specific descriptions of the prediction modes, refer to JVET-D1001 and corresponding reference software HM16.6-JEM4.0. Details are not described.

Table 3 describes stipulations for binarization of mode information of a prediction mode in the chrominance intra-frame prediction mode solution.

**Table 3: Binary representation of a chrominance prediction mode in HM16.6-JEM4.0**

| Index of a chrominance prediction mode | Binary representation |
| --- | --- |
| DM | 0 |
| CCLM | 10 |
| 0 | 1100 |
| 1 | 1101 |
| 2 | 1110 |
| 3 | 1111 |

In this embodiment, a solution described in the chrominance intra-frame prediction mode solution described in JVET-D1001 is improved. Corresponding to the direct prediction mode in the original solution, this embodiment provides a decoder-side direct mode (DDM). In this mode, based on a luminance pixel of a downsampled reconstructed luminance unit corresponding to a chrominance prediction unit, candidate chrominance intra-frame prediction modes are searched separately for optimal prediction modes on an encoder side and a decoder side. The optimal modes are determined by comparing a sum of absolute Hadamard transformed differences (SATD) of a transform residual that is obtained by the chrominance prediction unit in each candidate prediction mode.

S3001. Perform downsampling on a reconstructed luminance unit corresponding to a current chrominance prediction unit by using a 2D 3x2 { {1 2 1}, {1 2 1 } } filter.

The reconstructed luminance unit corresponding to the current chrominance prediction unit is a reconstructed luminance unit that covers a same image area as the current chrominance prediction unit, and is also a reconstructed luminance unit that is in a same code block (CB) in JVET-D1001. For specific execution of step S3001, refer to step S1001. Details are not described again. The downsampling operation reduces search complexity of a subsequent operation.

S3002. Search for an optimal prediction mode by using a SATD criterion.

In consideration of balance between complexity and performance, an iterative search manner is used to search for the optimal prediction mode. Initial candidate chrominance prediction modes include: a planar prediction mode, a direct current prediction mode, and directional prediction modes extracted, by using four prediction directions as a sampling interval, from 65 directional prediction modes stipulated in JVET-D1001. A SATD value of each of the foregoing initial candidate chrominance prediction modes is calculated, and a candidate chrominance prediction mode corresponding to a minimum SATD value is used as a start prediction mode of a next iterative search.

If the foregoing start prediction mode is a planar prediction mode or a direct current prediction mode, the start prediction mode is used as the optimal prediction mode, and an iterative search process is terminated. Otherwise, two prediction modes that are respectively before and after the start prediction mode in a prediction direction of the start prediction mode and whose sampling interval is 2 are used as candidate chrominance prediction modes of a second search, and a prediction mode corresponding to a minimum SATD value is selected from the three prediction modes including the two prediction modes and the initial prediction mode, as a start prediction mode of a next iterative search.

If the foregoing start prediction mode is a planar prediction mode or a direct current prediction mode, the start prediction mode is used as the optimal prediction mode, and an iterative search process is terminated. Otherwise, two prediction modes that are most adjacent (that is, a sampling interval is 1) to the start prediction mode in a prediction direction of the start prediction mode are used as candidate chrominance prediction modes of a third search, and a prediction mode corresponding to a minimum SATD value is selected from the three prediction modes including the two prediction modes and the initial prediction mode, as the optimal prediction mode, that is, a prediction mode represented by a DDM.

S3003. Adjust a codeword of a chrominance intra-frame prediction mode based on a DDM mode.

If the DDM mode is added to a chrominance prediction mode list of the chrominance intra-frame prediction mode solution described in JVET-D1001, candidate chrominance intra-frame prediction modes include the direct prediction mode, the linear prediction mode, the DDM mode, and three conventional modes (the planar prediction mode, the vertical prediction mode, and the horizontal prediction mode). When a luminance prediction mode represented by any one of the three conventional modes is the same as the luminance prediction mode represented by the direct prediction mode, the direct current prediction mode is used instead. Codewords may be re-allocated, as shown in Table 4, where 0 to 2 represent the three conventional modes.

**Table 4: Binary representation of a chrominance prediction mode in this embodiment of the present invention**

| Index of a chrominance prediction mode | Binary representation |
|---|---|
| CCLM | 0 |
| DDM | 10 |
| DM | 110 |
| 0 | 1110 |
| 1 | 11110 |
| 2 | 11111 |

In addition, for intra-frame prediction, a scanning order of transform coefficients depends on a prediction mode. The DDM mode is obtained based on a luminance reconstruction pixel, and therefore, obtaining of the DDM mode and decoding of a transform coefficient depend on each other. To resolve this problem, when a scanning order of chrominance prediction modes is being determined, a scanning manner corresponding to the direct prediction mode is used as a scanning manner corresponding to the DDM mode.

Table 5 shows beneficial effects of this embodiment in comparison with the chrominance intra-frame prediction mode solution described in JVET-D1001. This test result complies with general test conditions formulated by the JVET standard meeting organization.

**Table 5: Performance gains based on JVET general test conditions**

|  | Y | U | V |
|---|---|---|---|
| Class A1 | -0.21% | 0.03% | -0 26% |
| Class A2 | -0.41% | 0.14% | -0.11% |
| Class B | -0-26% | -0.01% | -0.08% |
| Class C | -0.30% | -0.53% | -0.34% |
| Class D | -0.23% | -0.40% | -0.64% |
| Class E | -0.37% | -0.271% | -0.09% |
| **Overall** | -0.29% | -0.16% | -0.25% |

It can be seen that, for all images with different resolution (different classes in the table), a bit rate is reduced for same video quality. Generally, gains of 0.29%, 0.16%, and 0.25% can be obtained for Y, U, and V components on average.

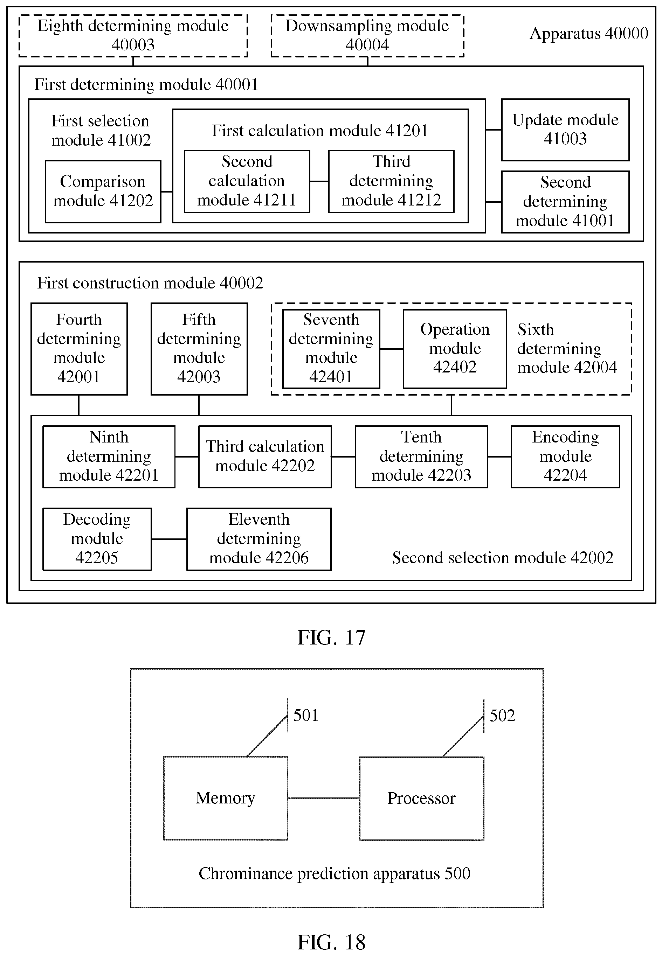

FIG. 17 is a block diagram of a chrominance prediction apparatus according to an embodiment of the present invention. Details are as follows:

This embodiment of the present invention provides the chrominance prediction apparatus 40000, where a to-be-processed chrominance unit corresponds to one luminance processing unit, the luminance processing unit and the to-be-processed chrominance unit are respectively processing units of a luminance component and a chrominance component of a same image area, the luminance processing unit corresponds to one or more reconstructed luminance units, and the apparatus includes:

a first determining module 40001, configured to determine one or more target luminance prediction modes of the luminance processing unit from preset candidate luminance prediction modes, where a difference between a predicted luminance value, of the luminance processing unit, corresponding to any target luminance prediction mode and a reconstructed luminance value of the luminance processing unit is less than or equal to a difference between a predicted luminance value, of the luminance processing unit, corresponding to each candidate luminance prediction mode that is not determined as the target luminance prediction mode and the reconstructed luminance value of the luminance processing unit; and

a first construction module 40002, configured to obtain a predicted chrominance value of the to-be-processed chrominance unit, where a candidate chrominance prediction mode set of the to-be-processed chrominance unit includes the target luminance prediction mode.

In a feasible implementation, the first determining module 40001 is specifically configured to: iteratively determine an initial prediction mode from the preset candidate luminance prediction modes until the initial prediction mode meets a preset condition, where the initial prediction mode that meets the preset condition corresponds to one or more candidate predicted luminance values.

In a feasible implementation, the first determining module 40001 includes:

a second determining module 41001, configured to determine a candidate luminance prediction mode subset from the preset candidate luminance prediction modes;

a first selection module 41002, configured to select an initial prediction mode from the candidate luminance prediction mode subset; and

an update module 41003, configured to: when the initial prediction mode does not meet a preset condition, update the preset candidate luminance prediction modes based on the initial prediction mode, redetermine the candidate luminance prediction mode subset from the updated preset candidate luminance prediction modes, and reselect the initial prediction mode from the redetermined candidate luminance prediction mode subset, until the reselected initial prediction mode meets the preset condition; or when the initial prediction mode meets a preset condition, use the initial prediction mode as the target luminance prediction mode.

In a feasible implementation, the preset candidate luminance prediction modes include at least one of a prediction mode included in directional prediction modes and a prediction mode included in non-directional prediction modes, the directional prediction modes include a prediction mode that is at an angle of N degrees with a horizontal direction of a two-dimensional plane, N is a non-negative number less than 360, the non-directional prediction modes include a direct current prediction mode and a planar prediction mode, and the second determining module 41001 is specifically configured to: determine that the candidate luminance prediction mode subset is the same as the preset candidate luminance prediction modes; or determine that the candidate luminance prediction mode subset includes prediction modes selected from the directional prediction modes at a preset angle interval; or determine that the candidate luminance prediction mode subset includes prediction modes selected from the directional prediction modes at a preset angle interval and the non-directional prediction mode.

In a feasible implementation, when the candidate luminance prediction mode subset includes at least two candidate luminance prediction modes, the first selection module 41002 includes:

a first calculation module 41201, configured to calculate a difference between the reconstructed luminance value and each of candidate predicted luminance values corresponding to the candidate luminance prediction modes in the candidate luminance prediction mode subset; and

a comparison module 41202, configured to: compare a plurality of differences, and determine that the initial prediction mode includes candidate luminance prediction modes corresponding to one or more smallest differences, where for the candidate luminance prediction modes corresponding to the one or more smallest differences, a difference between a predicted luminance value, of the luminance processing unit, corresponding to any initial prediction mode and the reconstructed luminance value of the luminance processing unit is less than or equal to a difference between a predicted luminance value, of the luminance processing unit, corresponding to each candidate luminance prediction mode that is in the candidate luminance prediction mode subset and that is not determined as the initial prediction mode and the reconstructed luminance value of the luminance processing unit.

When the candidate luminance prediction mode subset includes only one candidate luminance prediction mode, the first selection module 41002 is specifically configured to determine that the candidate luminance prediction mode is the initial prediction mode.

In a feasible implementation, the first calculation module 41201 includes:

a second calculation module 41211, configured to separately calculate a difference between an element at a corresponding location in a candidate predicted luminance value matrix and an element at a corresponding location in a reconstructed luminance value matrix, to obtain a difference matrix; and

a third determining module 41212, configured to determine the difference based on the difference matrix.

In a feasible implementation, the third determining module 41212 is specifically configured to: accumulate absolute values of all elements in the difference matrix as the difference; or transform the difference matrix to obtain a transformed difference matrix, and accumulate absolute values of all elements in the transformed difference matrix as the difference; or sequentially transform, quantize, dequantize, and inversely transform the difference matrix to obtain a reconstructed difference matrix, and accumulate absolute values of all elements in the reconstructed difference matrix as the difference.

In a feasible implementation, the transform includes Hadamard transform, Haar transform, discrete cosine transform, or discrete sine transform; and correspondingly, the inverse transform includes inverse Hadamard transform corresponding to the Hadamard transform, inverse Haar transform corresponding to the Haar transform, inverse discrete cosine transform corresponding to the discrete cosine transform, or inverse discrete sine transform corresponding to the discrete sine transform.

In a feasible implementation, the update module 41003 is specifically configured to: determine that the updated candidate luminance prediction mode subset includes the initial prediction mode and prediction modes that have a preset angle difference from the initial prediction mode.

In a feasible implementation, the prediction modes that have the preset angle difference from the initial prediction mode include: M prediction modes that are adjacent to the initial prediction mode, where M is a positive number.

In some feasible implementations, the preset condition includes: the initial prediction mode is the non-directional prediction mode; or each prediction mode that has the preset angle difference from the initial prediction mode exists in any candidate luminance prediction mode subset in the iteration, that is, exists in the candidate luminance prediction mode subset that is determined from the preset candidate luminance prediction modes or that is redetermined from the updated preset candidate luminance prediction modes; or a quantity of reselection times, that is, a quantity of iteration times, of the initial prediction mode reaches a preset quantity of times; or a difference corresponding to the initial prediction mode is less than a preset threshold.

In a feasible implementation, the first construction module 40002 includes:

a fourth determining module 42001, configured to determine a candidate chrominance prediction mode set of the to-be-processed chrominance unit based on the target luminance prediction mode;

a second selection module 42002, configured to select a chrominance prediction mode of the to-be-processed chrominance unit from the candidate chrominance prediction mode set; and

a fifth determining module 42003, configured to determine the predicted chrominance value of the to-be-processed chrominance unit based on the chrominance prediction mode.

In a feasible implementation, the fourth determining module 42001 is specifically configured to determine that the candidate chrominance prediction mode set includes only the target luminance prediction mode.

In a feasible implementation, the fourth determining module 42001 is specifically configured to: determine that the candidate chrominance prediction mode set includes the target luminance prediction mode and one or more preset candidate chrominance prediction modes.

In a feasible implementation, the preset candidate chrominance prediction modes include at least one of a horizontal prediction mode, a vertical prediction mode, a direct current prediction mode, a planar prediction mode, and a direct prediction mode.

In a feasible implementation, the preset candidate chrominance prediction modes further include a directional prediction mode in a non-horizontal direction or a non-vertical direction, or a linear prediction mode.

In a feasible implementation, the first construction module 40002 further includes:

a sixth determining module 42004, configured to determine a codeword of a candidate chrominance prediction mode in the candidate chrominance prediction mode set.

In a feasible implementation, the sixth determining module 42004 is specifically configured to determine the codeword of the candidate chrominance prediction mode in the candidate chrominance prediction mode set by using a variable-length code.

In a feasible implementation, a prediction mode corresponding to a candidate predicted luminance value that is of the luminance processing unit and that has a smallest difference from the reconstructed luminance value of the luminance processing unit is used as a first target luminance prediction mode, and the sixth determining module 42004 is specifically configured to:

when the candidate chrominance prediction mode set includes the first target luminance prediction mode, the linear prediction mode, and the direct prediction mode, assign a smallest codeword to the linear prediction mode, assign, to the first target luminance prediction mode, a smallest codeword other than the codeword used to represent the linear prediction mode, and assign, to the direct prediction mode, a smallest codeword other than the codewords used to represent the linear prediction mode and the first target luminance prediction mode; or

when the candidate chrominance prediction mode set includes the first target luminance prediction mode, the linear prediction mode, and the direct prediction mode, assign a smallest codeword to the first target luminance prediction mode, assign, to the linear prediction mode, a smallest codeword other than the codeword used to represent the first target luminance prediction mode, and assign, to the direct prediction mode, a smallest codeword other than the codewords used to represent the linear prediction mode and the first target luminance prediction mode; or

when the candidate chrominance prediction mode set includes the first target luminance prediction mode and the direct prediction mode, assign a smallest codeword to the first target luminance prediction mode, and assign, to the direct prediction mode, a smallest codeword other than the codeword used to represent the first target luminance prediction mode.

In a feasible implementation, the sixth determining module 42004 further includes:

a seventh determining module 42401, configured to determine a length of the variable-length code based on a quantity of the candidate chrominance prediction modes; and

an operation module 42402, configured to: when the quantity of the candidate chrominance prediction modes changes, increase or decrease the length of the variable-length code by one or more bits.

In a feasible implementation, the apparatus further includes:

an eighth determining module 40003, configured to: determine that the preset candidate luminance prediction modes include a candidate luminance prediction mode set, where the candidate luminance prediction mode set includes the directional prediction mode and the non-directional prediction mode; or determine that the preset candidate luminance prediction modes include luminance prediction modes of the one or more reconstructed luminance units corresponding to the luminance processing unit; or determine that the preset candidate luminance prediction modes include chrominance prediction modes of reconstructed chrominance units in a neighborhood of the to-be-processed chrominance unit.

In a feasible implementation, the eighth determining module 40003 is specifically configured to determine that the preset candidate luminance prediction modes include luminance prediction modes that are correlated to the luminance prediction modes of the one or more reconstructed luminance units.

In a feasible implementation, for the luminance prediction modes that are correlated to the luminance prediction modes of the one or more reconstructed luminance units:

when the luminance prediction mode is the directional prediction mode, the correlated luminance prediction modes include P prediction modes adjacent to the luminance prediction modes of the one or more reconstructed luminance units, where P is a positive number; or
when the luminance prediction mode is the directional prediction mode, the correlated luminance prediction modes include Q prediction modes adjacent to the luminance prediction modes of the one or more reconstructed luminance units and include the non-directional prediction mode, where Q is a positive number; or
when the luminance prediction mode is the non-directional prediction mode, the correlated luminance prediction modes include the preset directional prediction mode.

In a feasible implementation, the chrominance prediction modes of the reconstructed chrominance units in the neighborhood of the to-be-processed chrominance unit include: chrominance prediction modes of reconstructed chrominance units that are adjacent to the top, the left, the upper left, the upper right, and the lower left of the to-be-processed chrominance unit.

In a feasible implementation, the apparatus further includes:
a downsampling module 40004, configured to perform downsampling on the luminance processing unit; and correspondingly, the first determining module 40001 is configured to determine one or more target luminance prediction modes of the downsampled luminance processing unit from the preset candidate luminance prediction modes.

In a feasible implementation, the downsampling module 40004 is specifically configured to: perform downsampling on the luminance processing unit by using a filter whose filtering coefficient is $\begin{bmatrix} \frac{1}{8} & \frac{1}{4} & \frac{1}{8} \\ \frac{1}{8} & \frac{1}{4} & \frac{1}{8} \end{bmatrix}$ ; or perform

downsampling on the luminance processing unit by using a filter whose filtering coefficient is $\begin{bmatrix} 1 & 0 \\ 0 & 0 \end{bmatrix}$ ; or perform

downsampling on the luminance processing unit by using a filter whose filtering coefficient is $\begin{bmatrix} \frac{1}{2} & 0 \\ \frac{1}{2} & 0 \end{bmatrix}$ ; or perform

downsampling on the luminance processing unit by using a filter whose filtering coefficient is $\begin{bmatrix} \frac{1}{4} & \frac{1}{4} \\ \frac{1}{4} & \frac{1}{4} \end{bmatrix}$ .

In a feasible implementation, the apparatus is configured to encode the to-be-processed chrominance unit, and the second selection module 42002 includes:

a ninth determining module 42201, configured to traverse candidate chrominance prediction modes in the candidate chrominance prediction mode set to obtain corresponding candidate predicted chrominance values;
a third calculation module 42202, configured to calculate encoding costs of each candidate chrominance prediction mode based on an original value of the to-be-processed chrominance unit and the candidate predicted chrominance values obtained through the traversing;
a tenth determining module 42203, configured to determine a candidate chrominance prediction mode with smallest encoding costs as the chrominance prediction mode of the to-be-processed chrominance unit; and
an encoding module 42204, configured to encode an index of the chrominance prediction mode in the candidate chrominance prediction mode set.

In a feasible implementation, the encoding module 42204 is specifically configured to encode the index based on the determined codeword of the candidate chrominance prediction mode in the candidate chrominance prediction mode set.

In a feasible implementation, the apparatus is configured to decode the to-be-processed chrominance unit, and the second selection module 42002 includes:

a decoding module 42205, configured to decode an index of the chrominance prediction mode in the candidate chrominance prediction mode set from a bitstream; and

an eleventh determining module 42206, configured to determine the chrominance prediction mode from the candidate chrominance prediction mode set based on the index.

In a feasible implementation, the decoding module 42205 is specifically configured to decode the index based on the determined codeword of the candidate chrominance prediction mode in the candidate chrominance prediction mode set.

According to the chrominance prediction apparatus provided in this embodiment of the present invention, based on a reconstructed luminance unit, an improved candidate chrominance prediction mode set is constructed, and a chrominance prediction mode is selected by performing encoding by using an appropriate mode, thereby improving encoding efficiency.

FIG. 18 is a block diagram of another chrominance prediction apparatus according to an embodiment of the present invention. Details are as follows:

This embodiment of the present invention provides the chrominance prediction apparatus 500, where the apparatus includes a memory 501 and a processor 502 coupled to the memory. The memory is configured to store code and an instruction. The processor is configured to perform the following operations based on the code and the instruction: determining one or more target luminance prediction modes of a luminance processing unit from preset candidate luminance prediction modes, where a difference between a predicted luminance value, of the luminance processing unit, corresponding to any target luminance prediction mode and a reconstructed luminance value of the luminance processing unit is less than or equal to a difference between a predicted luminance value, of the luminance processing unit, corresponding to each candidate luminance prediction mode that is not determined as the target luminance prediction mode and the reconstructed luminance value of the luminance processing unit; and obtaining a predicted chrominance value of a to-be-processed chrominance unit, where a candidate chrominance prediction mode set of the to-be-processed chrominance unit includes the target luminance prediction mode; where the to-be-processed chrominance unit corresponds to one luminance processing unit, the luminance processing unit and the to-be-processed chrominance unit are respectively processing units of a luminance component and a chrominance component of a same image area, and the luminance processing unit corresponds to one or more reconstructed luminance units. The processor 502 may further specifically execute various feasible implementations of the chrominance prediction method 1000, and details are not described again.

According to the chrominance prediction apparatus provided in this embodiment of the present invention, based on a reconstructed luminance unit, an improved candidate chrominance prediction mode set is constructed, and a chrominance prediction mode is selected by performing encoding by using an appropriate mode, thereby improving encoding efficiency.

It should be noted that, the apparatus division is merely logical function division, but the present invention is not limited to the foregoing division, provided that corresponding functions can be implemented. In addition, specific names of the functional units are merely provided for the purpose of distinguishing the units from one another, but are not intended to limit the protection scope of the present invention.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or may be integrated into another system, or some features may be ignored or not performed. In addition, the displayed or discussed mutual couplings or direct couplings or communication connections may be implemented through some interfaces, or indirect couplings or communication connections between the apparatuses or units.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of the present invention may be integrated into one processing unit, or each of the units may exist alone physically, or two or more units may be integrated into one unit. The integrated unit may be implemented in a form of a software function unit.

When the integrated unit is implemented in the form of a software function unit and sold or used as an independent product, the integrated unit may be stored in a computer-readable storage medium. Based on such an understanding, all or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The storage medium is a non-transitory medium, and includes any medium that can store program code, such as a flash memory, a removable hard disk, a read-only memory, a random access memory, a magnetic disk, or an optical disc.

**EP 3 547 683 B1**

The foregoing descriptions are merely specific implementations of the present invention, but the protection scope of the present invention shall be subject to the protection scope of the claims.

**Claims**

1. A chrominance intra prediction method applying intra-frame prediction modes, wherein a to-be-processed chrominance unit corresponds to one luminance processing unit, the luminance processing unit and the to-be-processed chrominance unit are respectively processing units of a luminance component and a chrominance component of a same image area, the luminance processing unit corresponds to one or more reconstructed luminance units, and the method comprises:

   determining one or more target luminance prediction modes of the luminance processing unit from preset candidate luminance prediction modes, wherein a difference between a predicted luminance value, of the luminance processing unit, corresponding to any target luminance prediction mode and a reconstructed luminance value of the luminance processing unit is less than or equal to a difference between a predicted luminance value, of the luminance processing unit, corresponding to each candidate luminance prediction mode that is not determined as the target luminance prediction mode and the reconstructed luminance value of the luminance processing unit, and wherein one or more prediction modes are preset in the directional prediction modes and one or more prediction modes are preset in the non-directional prediction modes as the preset candidate luminance prediction modes; and
   obtaining a predicted chrominance value of the to-be-processed chrominance unit, wherein a candidate chrominance prediction mode set of the to-be-processed chrominance unit comprises the target luminance prediction mode.

2. The method according to claim 1, wherein the determining one or more target luminance prediction modes of the luminance processing unit from preset candidate luminance prediction modes comprises:

   determining a candidate luminance prediction mode subset from the preset candidate luminance prediction modes;
   selecting an initial prediction mode from the candidate luminance prediction mode subset; and
   when the initial prediction mode does not meet a preset condition, updating the preset candidate luminance prediction modes based on the initial prediction mode, redetermining the candidate luminance prediction mode subset from the updated preset candidate luminance prediction modes, and reselecting the initial prediction mode from the redetermined candidate luminance prediction mode subset, until the reselected initial prediction mode meets the preset condition; or
   when the initial prediction mode meets a preset condition, using the initial prediction mode as the target luminance prediction mode.

3. The method according to claim 2, wherein the directional prediction modes comprise a prediction mode that is at an angle of N degrees with a horizontal direction of a two-dimensional plane, N is a non-negative number less than 360, the non-directional prediction modes comprise a direct current, DC, prediction mode and a planar prediction mode, and the determining a candidate luminance prediction mode subset from the preset candidate luminance prediction modes comprises:

   determining that the candidate luminance prediction mode subset is the same as the preset candidate luminance prediction modes; or
   determining that the candidate luminance prediction mode subset comprises prediction modes selected from the directional prediction modes at a preset angle interval; or
   determining that the candidate luminance prediction mode subset comprises prediction modes selected from the directional prediction modes at a preset angle interval and the non-directional prediction mode.

4. The method according to claim 2 or 3, wherein the selecting an initial prediction mode from the candidate luminance prediction mode subset comprises:

   when the candidate luminance prediction mode subset comprises only one candidate luminance prediction mode, determining that the candidate luminance prediction mode is the initial prediction mode; or

39

when the candidate luminance prediction mode subset comprises at least two candidate luminance prediction modes, calculating a difference between the reconstructed luminance value and each of candidate predicted luminance values corresponding to the candidate luminance prediction modes in the candidate luminance prediction mode subset, and determining the initial prediction mode based on the difference, wherein a difference between a predicted luminance value, of the luminance processing unit, corresponding to any initial prediction mode and the reconstructed luminance value of the luminance processing unit is less than or equal to a difference between a predicted luminance value, of the luminance processing unit, corresponding to each candidate luminance prediction mode that is in the candidate luminance prediction mode subset and that is not determined as the initial prediction mode and the reconstructed luminance value of the luminance processing unit.

5. The method according to claim 4, wherein the candidate predicted luminance value is a candidate predicted luminance value matrix, the reconstructed luminance value is a reconstructed luminance value matrix, and the calculating a difference between the reconstructed luminance value and each of candidate predicted luminance values corresponding to the candidate luminance prediction modes in the candidate luminance prediction mode subset comprises:

separately calculating a difference between an element at a corresponding location in the candidate predicted luminance value matrix and an element at a corresponding location in the reconstructed luminance value matrix, to obtain a difference matrix; and
determining the difference based on the difference matrix.

6. The method according to claim 5, wherein the determining the difference based on the difference matrix comprises:

accumulating absolute values of all elements in the difference matrix as the difference; or
transforming the difference matrix to obtain a transformed difference matrix, and accumulating absolute values of all elements in the transformed difference matrix as the difference; or
sequentially transforming, quantizing, dequantizing, and inversely transforming the difference matrix to obtain a reconstructed difference matrix, and accumulating absolute values of all elements in the reconstructed difference matrix as the difference.

7. The method according to claim 6, wherein the transform comprises Hadamard transform, Haar transform, discrete cosine transform, DCT, or discrete sine transform, DST; and
correspondingly, the inverse transform comprises inverse Hadamard transform corresponding to the Hadamard transform, inverse Haar transform corresponding to the Haar transform, inverse discrete cosine transform corresponding to the discrete cosine transform, or inverse discrete sine transform corresponding to the discrete sine transform.

8. The method according to any one of claims 2 to 7, wherein the preset condition comprises:

the initial prediction mode is the non-directional prediction mode; or
each prediction mode that has the preset angle difference from the initial prediction mode exists in the candidate luminance prediction mode subset that is determined from the preset candidate luminance prediction modes or that is redetermined from the updated preset candidate luminance prediction modes; or
a quantity of reselection times of the initial prediction mode reaches a preset quantity of times; or
a difference corresponding to the initial prediction mode is less than a preset threshold.

9. The method according to any one of claims 1 to 8, wherein the obtaining a predicted chrominance value of the to-be-processed chrominance unit comprises:

determining a candidate chrominance prediction mode set of the to-be-processed chrominance unit based on the target luminance prediction mode;
selecting a chrominance prediction mode of the to-be-processed chrominance unit from the candidate chrominance prediction mode set; and
determining the predicted chrominance value of the to-be-processed chrominance unit based on the chrominance prediction mode.

10. The method according to claim 9, wherein the determining a candidate chrominance prediction mode set of the to-be-processed chrominance unit based on the target luminance prediction mode comprises:

determining that the candidate chrominance prediction mode set comprises only the target luminance prediction mode.

11. The method according to claim 9, wherein the determining a candidate chrominance prediction mode set of the to-be-processed chrominance unit based on the target luminance prediction mode comprises:
determining that the candidate chrominance prediction mode set comprises the target luminance prediction mode and one or more preset candidate chrominance prediction modes.

12. The method according to claim 11, wherein the preset candidate chrominance prediction modes comprise at least one of a horizontal prediction mode, a vertical prediction mode, the direct current prediction mode, the planar prediction mode, and a direct prediction mode, DM.

13. A chrominance intra prediction apparatus applying intra-frame prediction modes, wherein a to-be-processed chrominance unit corresponds to one luminance processing unit, the luminance processing unit and the to-be-processed chrominance unit are respectively processing units of a luminance component and a chrominance component of a same image area, the luminance processing unit corresponds to one or more reconstructed luminance units, and the apparatus comprises:

a first determining module, configured to determine one or more target luminance prediction modes of the luminance processing unit from preset candidate luminance prediction modes, wherein a difference between a predicted luminance value, of the luminance processing unit, corresponding to any target luminance prediction mode and a reconstructed luminance value of the luminance processing unit is less than or equal to a difference between a predicted luminance value, of the luminance processing unit, corresponding to each candidate luminance prediction mode that is not determined as the target luminance prediction mode and the reconstructed luminance value of the luminance processing unit, and wherein one or more prediction modes are preset in the directional prediction modes and one or more prediction modes are preset in the non-directional prediction modes as the preset candidate luminance prediction modes; and
a first construction module, configured to obtain a predicted chrominance value of the to-be-processed chrominance unit, wherein a candidate chrominance prediction mode set of the to-be-processed chrominance unit comprises the target luminance prediction mode.

**Patentansprüche**

1. Chrominanzintravorhersageverfahren, das Intra-Frame-Vorhersagemodi anwendet, wobei eine zu verarbeitende Chrominanzeinheit einer Luminanzverarbeitungseinheit entspricht, die Luminanzverarbeitungseinheit und die zu verarbeitende Chrominanzeinheit jeweils Verarbeitungseinheiten einer Luminanzkomponente und einer Chrominanzkomponente eines gleichen Bildbereichs sind, die Luminanzverarbeitungseinheit einer oder mehreren rekonstruierten Luminanzeinheiten entspricht und das Verfahren umfasst:

Bestimmen eines oder mehrerer Zielluminanzvorhersagemodi der Luminanzverarbeitungseinheit aus voreingestellten Kandidatenluminanzvorhersagemodi, wobei eine Differenz zwischen einem vorhergesagten Luminanzwert der Luminanzverarbeitungseinheit, der einem beliebigen Zielluminanzvorhersagemodus entspricht, und einem rekonstruierten Luminanzwert der Luminanzverarbeitungseinheit kleiner als oder gleich einer Differenz zwischen einem vorhergesagten Luminanzwert der Luminanzverarbeitungseinheit, der jedem Kandidatenluminanzvorhersagemodus, der nicht als der Zielluminanzvorhersagemodus bestimmt ist, entspricht, und dem rekonstruierten Luminanzwert der Luminanzverarbeitungseinheit ist und wobei ein oder mehrere Vorhersagemodi in den gerichteten Vorhersagemodi voreingestellt sind und ein oder mehrere Vorhersagemodi in den ungerichteten Vorhersagemodi als die voreingestellten Kandidatenluminanzvorhersagemodi voreingestellt sind; und
Erhalten eines vorhergesagten Chrominanzwerts der zu verarbeitenden Chrominanzeinheit, wobei ein Kandidatenchrominanzvorhersagemodussatz der zu verarbeitenden Chrominanzeinheit den Zielluminanzvorhersagemodus umfasst.

2. Verfahren nach Anspruch 1, wobei das Bestimmen eines oder mehrerer Zielluminanzvorhersagemodi der Luminanzverarbeitungseinheit aus voreingestellten Kandidatenluminanzvorhersagemodi umfasst:

Bestimmen eines Kandidatenluminanzvorhersagemodusuntersatzes aus den voreingestellten Kandidatenluminanzvorhersagemodi;

Auswählen eines anfänglichen Vorhersagemodus aus dem Kandidatenluminanzvorhersagemodusuntersatz; und

wenn der anfängliche Vorhersagemodus eine voreingestellte Bedingung nicht erfüllt, Aktualisieren der voreingestellten Kandidatenluminanzvorhersagemodi basierend auf dem anfänglichen Vorhersagemodus, Neubestimmen des Kandidatenluminanzvorhersagemodusuntersatzes aus den aktualisierten voreingestellten Kandidatenluminanzvorhersagemodi und Neuauswählen des anfänglichen Vorhersagemodus aus dem neu bestimmten Kandidatenluminanzvorhersagemodusuntersatz, bis der neu ausgewählte anfängliche Vorhersagemodus die voreingestellte Bedingung erfüllt; oder

wenn der anfängliche Vorhersagemodus eine voreingestellte Bedingung erfüllt, Verwenden des anfänglichen Vorhersagemodus als den Zielluminanzvorhersagemodus.

3. Verfahren nach Anspruch 2, wobei die gerichteten Vorhersagemodi einen Vorhersagemodus, der sich in einem Winkel von N Grad mit einer horizontalen Richtung einer zweidimensionalen Ebene befindet, umfassen, N eine nicht negative Zahl von kleiner als 360 ist, die nicht gerichteten Vorhersagemodi einen Gleichstrom(DC)-Vorhersagemodus, und einen planaren Vorhersagemodus umfassen und das Bestimmen eines Kandidatenluminanzvorhersagemodusuntersatzes aus den voreingestellten Kandidatenluminanzvorhersagemodi umfasst:

Bestimmen, dass der Kandidatenluminanzvorhersagemodusuntersatz der gleiche wie die voreingestellten Kandidatenluminanzvorhersagemodi ist; oder

Bestimmen, dass der Kandidatenluminanzvorhersagemodusuntersatz Vorhersagemodi, die aus den gerichteten Vorhersagemodi in einem voreingestellten Winkelintervall ausgewählt sind, umfasst; oder

Bestimmen, dass der Kandidatenluminanzvorhersagemodusuntersatz Vorhersagemodi, die aus den gerichteten Vorhersagemodi in einem voreingestellten Winkelintervall ausgewählt sind, und den ungerichteten Vorhersagemodus umfasst.

4. Verfahren nach Anspruch 2 oder 3, wobei das Auswählen eines anfänglichen Vorhersagemodus aus dem Kandidatenluminanzvorhersagemodusuntersatz umfasst:

wenn der Kandidatenluminanzvorhersagemodusuntersatz nur einen Kandidatenluminanzvorhersagemodus umfasst, Bestimmen, dass der Kandidatenluminanzvorhersagemodus der anfängliche Vorhersagemodus ist; oder

wenn der Kandidatenluminanzvorhersagemodusuntersatz mindestens zwei Kandidatenluminanzvorhersagemodi umfasst, Berechnen einer Differenz zwischen dem rekonstruierten Luminanzwert und jedem der Kandidatenluminanzvorhersagewerte, die den Kandidatenluminanzvorhersagemodi in dem Kandidatenluminanzvorhersagemodusuntersatz entsprechen, und Bestimmen des anfänglichen Vorhersagemodus basierend auf der Differenz, wobei eine Differenz zwischen einem vorhergesagten Luminanzwert der Luminanzverarbeitungseinheit, der einem beliebigen anfänglichen Vorhersagemodus entspricht, und dem rekonstruierten Luminanzwert der Luminanzverarbeitungseinheit kleiner als oder gleich einer Differenz zwischen einem vorhergesagten Luminanzwert der Luminanzverarbeitungseinheit, der jedem Kandidatenluminanzvorhersagemodus, der in dem Kandidatenluminanzvorhersagemodusuntersatz ist und der nicht als der anfängliche Vorhersagemodus bestimmt ist, entspricht, und dem rekonstruierten Luminanzwert der Luminanzverarbeitungseinheit ist.

5. Verfahren nach Anspruch 4, wobei der vorhergesagte Kandidatenluminanzwert eine Matrix des vorhergesagten Kandidatenluminanzwerts ist, der rekonstruierte Luminanzwert eine Matrix des rekonstruierten Luminanzwerts ist und das Berechnen einer Differenz zwischen dem rekonstruierten Luminanzwert und jedem der vorhergesagten Kandidatenluminanzwerte, die den Kandidatenluminanzvorhersagemodi in dem Kandidatenluminanzvorhersagemodusuntersatz entsprechen, umfasst:

separates Berechnen einer Differenz zwischen einem Element an einer entsprechenden Position in der Matrix des vorhergesagten Kandidatenluminanzwerts und einem Element an einer entsprechenden Position in der Matrix des rekonstruierten Luminanzwerts, um eine Differenzmatrix zu erhalten; und

Bestimmen der Differenz basierend auf der Differenzmatrix.

6. Verfahren nach Anspruch 5, wobei das Bestimmen der Differenz basierend auf der Differenzmatrix umfasst:

Akkumulieren von Absolutwerten aller Elemente in der Differenzmatrix als die Differenz; oder Transformieren der Differenzmatrix, um eine transformierte Differenzmatrix zu erhalten, und Akkumulieren von Absolutwerten aller Elemente in der transformierten Differenzmatrix als die Differenz; oder

sequenzielles Transformieren, Quantisieren, Dequantisieren und inverses Transformieren der Differenzmatrix, um eine rekonstruierte Differenzmatrix zu erhalten, und Akkumulieren von Absolutwerten aller Elemente in der rekonstruierten Differenzmatrix als die Differenz.

7.  Verfahren nach Anspruch 6, wobei die Transformation eine Hadamard-Transformation, eine Haar-Transformation, eine diskrete Cosinustransformation, DCT, oder eine diskrete Sinustransformation, DST, umfasst; und dementsprechend die inverse Transformation eine inverse Hadamard-Transformation, die der Hadamard-Transformation entspricht, eine inverse Haar-Transformation, die der Haar-Transformation, entspricht, eine inverse diskrete Cosinustransformation, die der diskreten Cosinustransformation entspricht, oder eine inverse diskrete Sinustransformation, die der diskreten Sinustransformation entspricht, umfasst.

8.  Verfahren nach einem der Ansprüche 2 bis 7, wobei die voreingestellte Bedingung umfasst:

der anfängliche Vorhersagemodus ist der ungerichtete Vorhersagemodus; oder
jeder Vorhersagemodus, der die voreingestellte Winkeldifferenz aus dem anfänglichen Vorhersagemodus aufweist, existiert in dem
Kandidatenluminanzvorhersagemodusuntersatz, der aus den voreingestellten Kandidatenluminanzvorhersagemodi bestimmt wird oder der aus den aktualisierten voreingestellten Kandidatenluminanzvorhersagemodi neu bestimmt wird; oder
eine Anzahl von Neuauswahlmalen des anfänglichen Vorhersagemodus erreicht eine voreingestellte Anzahl von Malen; oder
eine Differenz, die dem anfänglichen Vorhersagemodus entspricht, ist kleiner als eine voreingestellte Schwelle.

9.  Verfahren nach einem der Ansprüche 1 bis 8, wobei das Erhalten eines vorhergesagten Chrominanzwerts der zu verarbeitenden Chrominanzeinheit umfasst:

Bestimmen eines Kandidatenchrominanzvorhersagemodussatzes der zu verarbeitenden Chrominanzeinheit basierend auf dem Zielluminanzvorhersagemodus;
Auswählen eines Chrominanzvorhersagemodus der zu verarbeitenden Chrominanzeinheit aus dem Kandidatenchrominanzvorhersagemodussatz; und
Bestimmen des vorhergesagten Chrominanzwerts der zu verarbeitenden Chrominanzeinheit basierend auf dem Chrominanzvorhersagemodus.

10. Verfahren nach Anspruch 9, wobei das Bestimmen eines Kandidatenchrominanzvorhersagemodussatzes der zu verarbeitenden Chrominanzeinheit basierend auf dem Zielluminanzvorhersagemodus umfasst:
Bestimmen, dass der Kandidatenchrominanzvorhersagemodussatz nur den Zielluminanzvorhersagemodus umfasst.

11. Verfahren nach Anspruch 9, wobei das Bestimmen eines Kandidatenchrominanzvorhersagemodussatzes der zu verarbeitenden Chrominanzeinheit basierend auf dem Zielluminanzvorhersagemodus umfasst:
Bestimmen, dass der Kandidatenchrominanzvorhersagemodussatz den Zielluminanzvorhersagemodus und einen oder mehrere voreingestellte Kandidatenchrominanzvorhersagemodi umfasst.

12. Verfahren nach Anspruch 11, wobei die voreingestellten Kandidatenchrominanzvorhersagemodi mindestens einen von einem horizontalen Vorhersagemodus, einem vertikalen Vorhersagemodus, dem Gleichstromvorhersagemodus, dem planaren Vorhersagemodus und einem direkten Vorhersagemodus, DM, umfassen.

13. Chrominanzintravorhersageeinrichtung, die Intra-Frame-Vorhersagemodi anwendet, wobei eine zu verarbeitende Chrominanzeinheit einer Luminanzverarbeitungseinheit entspricht, die Luminanzverarbeitungseinheit und die zu verarbeitende Chrominanzeinheit jeweils Verarbeitungseinheiten einer Luminanzkomponente und einer Chrominanzkomponente eines gleichen Bildbereichs sind, die Luminanzverarbeitungseinheit einer oder mehreren rekonstruierten Luminanzeinheiten entspricht und die Einrichtung umfasst:

ein erstes Bestimmungsmodul, das konfiguriert ist, um einen oder mehrere Zielluminanzvorhersagemodi der Luminanzverarbeitungseinheit aus voreingestellten Kandidatenluminanzvorhersagemodi zu bestimmen, wobei eine Differenz zwischen einem vorhergesagten Luminanzwert der Luminanzverarbeitungseinheit, der einem beliebigen Zielluminanzvorhersagemodus entspricht, und einem rekonstruierten Luminanzwert der Luminanzverarbeitungseinheit kleiner als oder gleich einer Differenz zwischen einem vorhergesagten Luminanzwert der Luminanzverarbeitungseinheit, der jedem Kandidatenluminanzvorhersagemodus, der nicht als der Zielluminanzvorhersagemodus bestimmt ist, entspricht, und dem rekonstruierten Luminanzwert der Luminanzverarbeitungseinheit ist und wobei ein oder mehrere Vorhersagemodi in den gerichteten Vorhersagemodi voreingestellt sind und ein oder mehrere Vorhersagemodi in den ungerichteten Vorhersagemodi als die voreingestellten Kandidatenluminanzvorhersagemodi voreingestellt sind; und

ein erstes Konstruktionsmodul, das konfiguriert ist, um einen vorhergesagten Chrominanzwert der zu verarbeitenden Chrominanzeinheit zu erhalten, wobei ein Kandidatenchrominanzvorhersagemodussatz der zu verarbeitenden Chrominanzeinheit den Zielluminanzvorhersagemodus umfasst.

## Revendications

1. Procédé d'intra-prédiction de chrominance appliquant des modes de prédiction intra-trame,

dans lequel une unité de chrominance à traiter correspond à une unité de traitement de luminance, l'unité de traitement de luminance et l'unité de chrominance à traiter sont respectivement des unités de traitement d'une composante de luminance et d'une composante de chrominance d'une même zone d'image, l'unité de traitement de luminance correspond à une ou plusieurs unités de luminance reconstruites, et le procédé comprend :

la détermination d'un ou plusieurs modes de prédiction de luminance cibles de l'unité de traitement de luminance parmi des modes de prédiction de luminance candidats prédéfinis, dans lequel une différence entre une valeur de luminance prédite, de l'unité de traitement de luminance, correspondant à tout mode de prédiction de luminance cible, et une valeur de luminance reconstruite de l'unité de traitement de luminance, est inférieure ou égale à une différence entre une valeur de luminance prédite, de l'unité de traitement de luminance, correspondant à chaque mode de prédiction de luminance candidat qui n'est pas déterminé comme étant le mode de prédiction de luminance cible, et la valeur de luminance reconstruite de l'unité de traitement de luminance, et dans lequel un ou plusieurs modes de prédiction sont prédéfinis dans les modes de prédiction directionnels et un ou plusieurs modes de prédiction sont prédéfinis dans les modes de prédiction non directionnels en tant que modes de prédiction de luminance candidats prédéfinis ; et
l'obtention d'une valeur de chrominance prédite de l'unité de chrominance à traiter,
dans lequel un ensemble de modes de prédiction de chrominance candidats de l'unité de chrominance à traiter comprend le mode de prédiction de luminance cible.

2. Procédé selon la revendication 1, dans lequel la détermination d'un ou plusieurs modes de prédiction de luminance cibles de l'unité de traitement de luminance parmi des modes de prédiction de luminance candidats prédéfinis comprend :

la détermination d'un sous-ensemble de modes de prédiction de luminance candidats parmi les modes de prédiction de luminance candidats prédéfinis ;
la sélection d'un mode de prédiction initial parmi le sous-ensemble de modes de prédiction de luminance candidats ; et
lorsque le mode de prédiction initial ne répond pas à une condition prédéfinie, la mise à jour des modes de prédiction de luminance candidats prédéfinis sur la base du mode de prédiction initial, la nouvelle détermination du sous-ensemble de modes de prédiction de luminance candidats parmi les modes de prédiction de luminance candidats prédéfinis mis à jour, et la nouvelle sélection du mode de prédiction initial parmi le sous-ensemble de modes de prédiction de luminance candidats déterminés à nouveau, jusqu'à ce que le mode de prédiction initial sélectionné à nouveau réponde à la condition prédéfinie ; ou
lorsque le mode de prédiction initial répond à une condition prédéfinie, l'utilisation du mode de prédiction initial en tant que mode de prédiction de luminance cible.

3. Procédé selon la revendication 2, dans lequel les modes de prédiction directionnels comprennent un mode de prédiction qui fait un angle de N degrés avec une direction horizontale d'un plan bidimensionnel, N est un nombre non négatif inférieur à 360, les modes de prédiction non directionnels comprennent un mode de prédiction par courant continu, DC, et un mode de prédiction planaire, et la détermination d'un sous-ensemble de modes de prédiction de luminance candidats parmi les modes de prédiction de luminance candidats prédéfinis comprend :

la détermination du fait que le sous-ensemble de modes de prédiction de luminance candidats est identique aux modes de prédiction de luminance candidats prédéfinis ; ou

la détermination du fait que le sous-ensemble de modes de prédiction de luminance candidats comprend des modes de prédiction sélectionnés parmi les modes de prédiction directionnels à un intervalle d'angle prédéfini ; ou

la détermination du fait que le sous-ensemble de modes de prédiction de luminance candidats comprend des modes de prédiction sélectionnés parmi les modes de prédiction directionnels à un intervalle d'angle prédéfini et le mode de prédiction non directionnels.

4. Procédé selon la revendication 2 ou 3, dans lequel la sélection d'un mode de prédiction initial parmi le sous-ensemble de modes de prédiction de luminance candidats comprend :

lorsque le sous-ensemble de modes de prédiction de luminance candidats ne comprend qu'un seul mode de prédiction de luminance candidat, la détermination du fait que le mode de prédiction de luminance candidat est le mode de prédiction initial ; ou

lorsque le sous-ensemble de modes de prédiction de luminance candidats comprend au moins deux modes de prédiction de luminance candidats, le calcul d'une différence entre la valeur de luminance reconstruite et chacune de valeurs de luminance prédites candidates correspondant aux modes de prédiction de luminance candidats dans le sous-ensemble de modes de prédiction de luminance candidats, et la détermination du mode de prédiction initial sur la base de la différence, dans lequel une différence entre une valeur de luminance prédite, de l'unité de traitement de luminance, correspondant à tout mode de prédiction initial, et la valeur de luminance reconstruite de l'unité de traitement de luminance, est inférieure ou égale à une différence entre une valeur de luminance prédite, de l'unité de traitement de luminance, correspondant à chaque mode de prédiction de luminance candidat qui se trouve dans le sous-ensemble de modes de prédiction de luminance candidats et qui n'est pas déterminé comme étant le mode de prédiction initial, et la valeur de luminance reconstruite de l'unité de traitement de luminance.

5. Procédé selon la revendication 4, dans lequel la valeur de luminance prédite candidate est une matrice de valeurs de luminance prédite candidate, la valeur de luminance reconstruite est une matrice de valeurs de luminance reconstruite, et le calcul d'une différence entre la valeur de luminance reconstruite et chacune des valeurs de luminance prédites candidates correspondant aux modes de prédiction de luminance candidats dans le sous-ensemble de modes de prédiction de luminance candidats comprend :

le calcul séparé d'une différence entre un élément à un emplacement correspondant dans la matrice de valeurs de luminance prédite candidate et un élément à un emplacement correspondant dans la matrice de valeurs de luminance reconstruite, pour obtenir une matrice de différence ; et

la détermination de la différence sur la base de la matrice de différence.

6. Procédé selon la revendication 5, dans lequel la détermination de la différence sur la base de la matrice de différence comprend :

l'accumulation de valeurs absolues de tous les éléments dans la matrice de différence en tant que différence ; ou la transformation de la matrice de différence pour obtenir une matrice de différence transformée, et l'accumulation de valeurs absolues de tous les éléments dans la matrice de différence transformée en tant que différence ; ou

la transformation, la quantification, la déquantification et la transformation inverse, de manière séquentielle, de la matrice de différence pour obtenir une matrice de différence reconstruite, et l'accumulation de valeurs absolues de tous les éléments dans la matrice de différence reconstruite en tant que différence.

7. Procédé selon la revendication 6, dans lequel la transformée comprend la transformée de Hadamard, la transformée de Haar, la transformée en cosinus discrète, DCT, ou la transformée en sinus discrète, DST ; et de manière correspondante, la transformée inverse comprend la transformée de Hadamard inverse correspondant à la transformée de Hadamard, la transformée de Haar inverse correspondant à la transformée de Haar, la transformée en cosinus discrète inverse correspondant à la transformée en cosinus discrète, ou la transformée en sinus discrète inverse correspondant à la transformée en sinus discrète.

8. Procédé selon l'une quelconque des revendications 2 à 7, dans lequel la condition prédéfinie comprend :

le mode de prédiction initial est le mode de prédiction non directionnel ; ou

chaque mode de prédiction qui a la différence d'angle prédéfinie par rapport au mode de prédiction initial existe dans le sous-ensemble de modes de prédiction de luminance candidats qui est déterminé parmi les modes de prédiction de luminance candidats prédéfinis ou qui est déterminé à nouveau parmi les modes de prédiction de luminance candidats prédéfinis mis à jour ; ou

une quantité de temps de nouvelle sélection du mode de prédiction initial atteint une quantité de temps prédéfinie ; ou

une différence correspondant au mode de prédiction initial est inférieure à un seuil prédéfini.

9. Procédé selon l'une quelconque des revendications 1 à 8, dans lequel l'obtention d'une valeur de chrominance prédite de l'unité de chrominance à traiter comprend :

la détermination d'un ensemble de modes de prédiction de chrominance candidats de l'unité de chrominance à traiter sur la base du mode de prédiction de luminance cible ;
la sélection d'un mode de prédiction de chrominance de l'unité de chrominance à traiter parmi l'ensemble de modes de prédiction de chrominance candidats ; et
la détermination de la valeur de chrominance prédite de l'unité de chrominance à traiter sur la base du mode de prédiction de chrominance.

10. Procédé selon la revendication 9, dans lequel la détermination d'un ensemble de modes de prédiction de chrominance candidats de l'unité de chrominance à traiter sur la base du mode de prédiction de luminance cible comprend :
la détermination du fait que l'ensemble de modes de prédiction de chrominance candidats ne comprend que le mode de prédiction de luminance cible.

11. Procédé selon la revendication 9, dans lequel la détermination d'un ensemble de modes de prédiction de chrominance candidats de l'unité de chrominance à traiter sur la base du mode de prédiction de luminance cible comprend :
la détermination du fait que l'ensemble de modes de prédiction de chrominance candidats comprend le mode de prédiction de luminance cible et un ou plusieurs modes de prédiction de chrominance candidats prédéfinis.

12. Procédé selon la revendication 11, dans lequel les modes de prédiction de chrominance candidats prédéfinis comprennent au moins l'un parmi un mode de prédiction horizontal, un mode de prédiction vertical, le mode de prédiction par courant continu, le mode de prédiction planaire, et un mode de prédiction direct, DM.

13. Appareil d'intra-prédiction de chrominance appliquant des modes de prédiction intra-trame,
dans lequel une unité de chrominance à traiter correspond à une unité de traitement de luminance, l'unité de traitement de luminance et l'unité de chrominance à traiter sont respectivement des unités de traitement d'une composante de luminance et d'une composante de chrominance d'une même zone d'image, l'unité de traitement de luminance correspond à une ou plusieurs unités de luminance reconstruites, et l'appareil comprend :

un premier module de détermination, configuré pour déterminer un ou plusieurs modes de prédiction de luminance cibles de l'unité de traitement de luminance parmi des modes de prédiction de luminance candidats prédéfinis, dans lequel une différence entre une valeur de luminance prédite, de l'unité de traitement de luminance, correspondant à tout mode de prédiction de luminance cible, et une valeur de luminance reconstruite de l'unité de traitement de luminance, est inférieure ou égale à une différence entre une valeur de luminance prédite, de l'unité de traitement de luminance, correspondant à chaque mode de prédiction de luminance candidat qui n'est pas déterminé comme étant le mode de prédiction de luminance cible, et la valeur de luminance reconstruite de l'unité de traitement de luminance, et dans lequel un ou plusieurs modes de prédiction sont prédéfinis dans les modes de prédiction directionnels et un ou plusieurs modes de prédiction sont prédéfinis dans les modes de prédiction non directionnels en tant que modes de prédiction de luminance candidats prédéfinis ; et
un premier module de construction, configuré pour obtenir une valeur de chrominance prédite de l'unité de chrominance à traiter, dans lequel un ensemble de modes de prédiction de chrominance candidats de l'unité de chrominance à traiter comprend le mode de prédiction de luminance cible.

FIG. 1

FIG. 2

10

| Source apparatus 12 | Destination apparatus 14 |
|---|---|
| Video source 18 | Display apparatus 32 |
| ↓ | ↑ |
| Video encoder 20 | Video decoder 30 |
| ↓ | ↑ |
| Output interface 22 | Input interface 28 |

16

FIG. 3

**Video encoder 20**

| Encoder-side prediction module 201 | Transform and quantization module 202 | Entropy encoding module 203 |
|---|---|---|
| | Encoding and reconstruction module 204 | Encoder-side filtering module 205 |

FIG. 4

Video decoder 30

| Entropy decoding module 208 | Inverse transform and dequantization module 207 | |
| Decoder-side prediction module 206 | Decoding and reconstruction module 209 | Decoder-side filtering module 210 |

FIG. 5

FIG. 6

| $R_{0,0}$ | $R_{1,0}$ | $R_{2,0}$ | ... | $R_{N,0}$ | $R_{N+1,0}$ | $R_{N+2,0}$ | ... | $R_{2N,0}$ |
|---|---|---|---|---|---|---|---|---|
| $R_{0,1}$ | $P_{1,1}$ | $P_{2,1}$ | ... | $P_{N,1}$ | | | | |
| $R_{0,2}$ | $P_{1,2}$ | ⋱ | | ⋮ | | | | |
| ⋮ | ⋮ | | | | | | | |
| $R_{0,N}$ | $P_{1,N}$ | ... | | $P_{N,N}$ | | | | |
| $R_{0,N+1}$ | | | | | | | | |
| $R_{0,N+2}$ | | | | | | | | |
| ⋮ | | | | | | | | |
| $R_{0,2N}$ | | | | | | | | |

FIG. 7

$$\left( \quad + \quad \right) \gg 1$$

- - -► Interpolation     ═══► Copy

FIG. 8

Perform downsampling on a luminance processing unit corresponding to a to-be-processed chrominance unit ⌐ S1001

Determine preset candidate luminance prediction modes ⌐ S1002

Determine one or more target luminance prediction modes of the luminance processing unit from the preset candidate luminance prediction modes ⌐ S1003

Use the target luminance prediction mode as a candidate chrominance prediction mode, to obtain a predicted chrominance value of the to-be-processed chrominance unit ⌐ S1004

FIG. 9

○ : Luminance location          △ : Chrominance location

FIG. 10

FIG. 11

| Determine a candidate luminance prediction mode subset from preset candidate luminance prediction modes | S1301 |

↓

| Select an initial prediction mode from the candidate luminance prediction mode subset | S1302 |

↓

| Update the preset candidate luminance prediction modes based on the initial prediction mode when the initial prediction mode does not meet a preset condition | S1303 |

FIG. 12

| Determine a candidate luminance prediction mode subset from preset candidate luminance prediction modes | S1311 |

↓

| Calculate at least two differences between a reconstructed luminance value and candidate predicted luminance values corresponding to at least two candidate luminance prediction modes in the candidate luminance prediction mode subset | S1312 |

↓

| Compare the at least two difference values to determine candidate luminance prediction modes corresponding to one or more smallest differences | S1313 |

FIG. 13

| Determine a candidate chrominance prediction mode set of a to-be-processed chrominance unit based on a target luminance prediction mode | S1401 |

↓

| Determine a codeword of a candidate chrominance prediction mode in the candidate chrominance prediction mode set | S1402 |

↓

| Select a chrominance prediction mode of the to-be-processed chrominance unit from the candidate chrominance prediction mode set | S1403 |

↓

| Determine a predicted chrominance value of the to-be-processed chrominance unit based on the chrominance prediction mode | S1404 |

FIG. 14

| Determine a candidate predicted second-chrominance value that is of a second-chrominance processing unit and that has a smallest difference from a reconstructed second-chrominance value of a second-chrominance processing unit | S2001 |

↓

| Use a prediction mode corresponding to the candidate predicted second-chrominance value as a first-chrominance prediction mode, and obtain a predicted first-chrominance value of a to-be-processed first-chrominance unit | S2002 |

FIG. 15

| Perform downsampling on a reconstructed luminance unit corresponding to a current chrominance prediction unit by using a 2D 3x2 {{1 2 1},{1 2 1}} filter | S3001 |

↓

| Search for an optimal prediction mode by using a SATD criterion | S3002 |

↓

| Adjust a codeword of a chrominance intra-frame prediction mode based on a DDM mode | S3003 |

FIG. 16

Eighth determining module 40003

Downsampling module 40004

Apparatus 40000

First determining module 40001

First selection module 41002

Comparison module 41202

First calculation module 41201

Second calculation module 41211

Third determining module 41212

Update module 41003

Second determining module 41001

First construction module 40002

Fourth determining module 42001

Fifth determining module 42003

Seventh determining module 42401

Operation module 42402

Sixth determining module 42004

Ninth determining module 42201

Third calculation module 42202

Tenth determining module 42203

Encoding module 42204

Decoding module 42205

Eleventh determining module 42206

Second selection module 42002

FIG. 17

501

502

Memory

Processor

Chrominance prediction apparatus 500

FIG. 18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YI-JEN CHIU**. Cross-channel techniques to improve intra chroma prediction. *Joint Collaborative Team on Video Coding (JCT-VC) of ITU-T SG16 WP3 and ISO/IEC JTC1/SC29/WG11*, 02 July 2011

- **XIU X et al.** Decoder-side intra mode derivation. *3. MEETING of THE JOINT VIDEO EXPLORATION TEAM OF ISO/IEC JTC1/SC29/WG11 AND ITU-T SG. 16*, 26 May 2016